Europäisches Patentamt

European Patent Office

Office européen des brevets

(19)

(11) **EP 0 989 315 B1**

(12) **EUROPÄISCHE PATENTSCHRIFT**

(45) Veröffentlichungstag und Bekanntmachung des Hinweises auf die Patenterteilung:
**06.10.2004 Patentblatt 2004/41**

(51) Int Cl.$^7$: **F16C 39/06**

(21) Anmeldenummer: **99810760.1**

(22) Anmeldetag: **25.08.1999**

(54) **Magnetische Lagervorrichtung**

Magnetic bearing

Palier magnétique

(84) Benannte Vertragsstaaten:
**CH DE GB LI**

(30) Priorität: **24.09.1998 EP 98810956**

(43) Veröffentlichungstag der Anmeldung:
**29.03.2000 Patentblatt 2000/13**

(73) Patentinhaber: **Lust Antriebstechnik GmbH**
**35633 Lahnau (DE)**

(72) Erfinder:
• **Schöb, Reto**
**8604 Volketswil (CH)**

• **Jenckel, Peter**
**8046 Zürich (CH)**
• **Reiter, Hans-Georg**
**8044 Zürich (CH)**

(74) Vertreter: **Sulzer Management AG**
**KS/Patente/0007**
**Zürcherstrasse 14**
**8401 Winterthur (CH)**

(56) Entgegenhaltungen:
WO-A-97/07340       WO-A-97/08808
US-A- 5 155 402     US-A- 5 300 841
US-A- 5 424 595     US-A- 5 543 673
US-A- 5 578 880

## Beschreibung

Die Erfindung betrifft eine magnetische Lagervorrichtung zum Lagern eines Körpers, insbesondere eines Rotors, gemäss dem Oberbegriff des unabhängigen Anspruchs.

Magnetische Lagervorrichtungen zur berührungsfreien Lagerung von Körpern, wie beispielsweise Rotoren von Elektromotoren, rotierende Wellen, Pumpenrotoren oder nicht drehende Körper, gewinnen immer mehr an Bedeutung. Solche Lagervorrichtungen umfassen typischerweise einen Stator, der mit mindestens einer elektrischen Wicklung versehen ist, mit welcher ein magnetisches Steuerfeld erzeugbar und regelbar ist. Mittels dieses regelbaren Steuerfelds werden magnetische Kräfte auf den zu lagernden, rotierenden oder schwebenden, Körper ausgeübt, die diesen bezüglich des Stators berührungsfrei in einer Soll-Position halten.

In der WO-A-97/07340 wird ein Magnetlager offenbart, dessen Stator eine dreiphasige Drehstromwicklung zum Erzeugen des magnetischen Steuerfelds umfasst. Durch Überlagerung dieses Drehfelds mit einem unipolaren Magnetfeld werden die radialen magnetischen Lagerkräfte erzeugt.

In der WO-A-95/18925 wird eine besondere Form einer magnetischen Lagervorrichtung, nämlich ein sogenannter lagerloser Motor, offenbart. Ein lagerloser Motor ist ein elektromagnetischer Drehantrieb, bei welchem der Rotor mittels magnetischer Kräfte berührungslos bezüglich des Stators gelagert ist. Das Charakteristikum, dem der lagerlose Motor seine Bezeichnung verdankt, ist es, dass der Stator als Lager- und Antriebsstator ausgestaltet ist und der Rotor sowohl als Lager- als auch als Antriebsrotor dient. Das bedeutet, bei einem lagerlosen Motor bilden das Magnetlager und die Antriebsvorrichtung eine nicht trennbare körperliche Einheit. Separate Magnetlager oder separate Antriebsvorrichtungen für den Rotor sind nicht vorgesehen. Folglich ist der sogenannte lagerlose Motor auch eine magnetische Lagervorrichtung mit integriertem Drehantrieb.

Der Lager-Antriebsstator eines lagerlosen Motors ist so ausgestaltet bzw. mit elektrischen Wicklungen versehen, dass er ein elektromagnetisches Drehfeld erzeugt, welches zum einen ein Drehmoment auf den Rotor ausübt, das dessen Rotation um die Drehachse antreibt, und welches zum anderen eine beliebig einstellbare Querkraft auf den Rotor ausübt, sodass dessen radiale Position bezüglich einer zur Drehachse senkrechten Ebene vorgebbar bzw. aktiv regelbar ist. Dazu umfassen die elektrischen Wicklungen des Stators - wie dies beispielsweise in der bereits zitierten WO-A-95/18925 offenbart ist - eine Antriebswicklung mit der Polpaarzahl p und eine Steuerwicklung mit der Polpaarzahl p±1 zur Erzeugung eines magnetischen Steuerfelds. Mit diesen beiden Wicklungen ist ein elektromagnetisches Drehfeld erzeugbar, dass sowohl ein antreibendes Drehmoment als auch eine beliebig einstellbare Querkraft auf den Rotor ausübt. Der Rotor ist somit bezüglich dreier Freiheitsgrade, nämlich der Rotation um die Drehachse A und seiner radialen Position bezüglich einer zur Drehachse senkrechten Ebene (zwei Freiheitsgrade) aktiv steuerbar bzw. regelbar. Bezüglich dreier weiterer Freiheitsgrade, nämlich seiner axialen Auslenkung in Richtung der Drehachse und Verkippungen bezüglich der zur Drehachse A senkrechten Ebene (zwei Freiheitsgrade) ist der Rotor passiv magnetisch, das heisst nicht ansteuerbar, durch Reluktanzkräfte stabilisiert.

In diesem Sinne ist für die folgenden Ausführungen der Begriff "lagerloser Motor" zu verstehen. Bezüglich weiterer Details der Ausgestaltung und speziell der Ansteuerung bzw. Regelung des lagerlosen Motors sei hier auf die WO-A-95/18925 verwiesen.

Auch bei dem lagerlosen Motor gemäss WO-A-95/18925 kann die Steuerwicklung zum Erzeugen des magnetischen Steuerfelds, mit dem die radiale Position des Rotors geregelt wird, als dreiphasige Wicklung ausgestaltet sein, ähnlich wie dies in der WO-A-97/07340 für das Magnetlager offenbart ist. In der letztgenannten Druckschrift sind auch einige Gründe erwähnt, warum es vorteilhaft ist, die Steuerwicklung als dreiphasige Drehstromwicklung auszugestalten.

Ein Problem bei den bekannten magnetischen Lagervorrichtungen ist darin zu sehen, dass beim Auftreten von Fehlern, wie beispielsweise dem Ausfall einer Verstärkerstufe oder dem Bruch einer elektrischen Leitung in einer der Phasen der Steuerwicklung, ein ordnungsgemässes Funktionieren der Lagervorrichtung nicht mehr gegeben ist. Dies kann insbesondere bei sehr sensiblen Anwendungen, z. B. in Blutpumpen, ein Sicherheitsrisiko darstellen.

Der Erfindung liegt deshalb die Aufgabe zugrunde, eine magnetische Lagervorrichtung bereitzustellen, die auch beim Auftreten von Fehlern noch einen ordnungsgemässen Betrieb, das heisst insbesondere eine zuverlässige magnetische Lagerung des zu lagernden Körpers, ermöglicht.

Die diese Aufgabe lösende magnetische Lagervorrichtung zum Lagern eines Körpers, insbesondere eines Rotors, ist durch die Merkmale des unabhängigen Anspruchs gekennzeichnet.

Die erfindungsgemässe magnetische Lagervorrichtung umfasst also einen Stator mit einer mindestens drei Stränge aufweisenden Steuerwicklung zum Erzeugen eines magnetisches Steuerfelds, mit welchem die Position des Körpers bezüglich des Stators regelbar ist, wobei jeder Strang zu einer anderen elektrischen Phase gehört, sowie eine Stelleinrichtung, die in einem ersten Betriebsmodus jeden Strang mit jeweils einem Phasenstrom oder jeweils einer Phasenspannung als Stellgrösse versorgt. Es sind Mittel vorgesehen, um die Stellgrösse für jeden Strang unabhängig von der Stellgrösse für die anderen Stränge zu regeln. Ferner ist eine Überwachungseinheit vorgesehen, welche die Lagervorrichtung in einen zweiten Betriebsmodus umschalten kann, in welchem eine reduzierte Anzahl von Phasen, die mindestens zwei ist, das magnetische Steuerfeld erzeugt.

Die erfindungsgemässe Lagervorrichtung kann also in zwei Betriebsmodi betrieben werden. Im ersten Betriebsmodus wird das magnetische Steuerfeld mit allen Phasen der drei- oder höherphasigen Steuerwicklung, also mit allen ihren Strängen, generiert. Im zweiten Betriebsmodus wird das magnetische Steuerfeld nur noch mit einer reduzierten Anzahl von Phasen, die jedoch mindestens zwei beträgt, erzeugt. Es werden also nicht mehr alle Stränge der Steuerwicklung verwendet, einer oder mehrere Stränge der Steuerwicklung sind in diesem zweiten Betriebsmodus "abgeschaltet". Eine zweiphasige Steuerwicklung reicht nämlich aus, um das für die Regelung der radialen Position des Körpers bezüglich des Stators benötigte Steuerfeld zu generieren. Dazu ist es jedoch notwendig, dass die beiden Phasenströme oder Phasenspannungen unabhängig voneinander geregelt werden können.

Durch die beiden Betriebsmodi ist es möglich, beim Auftreten eines Fehlers in einer der Phasen, beispielsweise beim Ausfall eines Wicklungsstrangs aufgrund eines Leitungsbruchs oder eines Kurzschlusses oder beim Ausfall des Verstärkers, der diese Phase versorgt, die Lagervorrichtung mit einer reduzierten Anzahl von Phasen weiterhin zu betreiben, ohne dass Zugeständnisse an das ordnungsgemässe Funktionieren der magnetischen Lagerung vonnöten sind. Diese Fehlertoleranz, nämlich auch beim Ausfall einer Phase der Steuerwicklung noch einen sicheren Betrieb der magnetischen Lagervorrichtung zu gewährleisten, bedeutet eine enorme Steigerung der Betriebssicherheit im Vergleich zu anderen Magnetlagern.

Vorzugsweise überwacht die Überwachungseinheit das Funktionieren jeder einzelnen Phase und schaltet beim Auftreten eines Fehlers in einer Phase die Lagervorrichtung in den zweiten Betriebsmodus um, in welchem nur noch die Phasen ohne Fehler das magnetische Steuerfeld erzeugen.

Wie bereits erwähnt ist es für den Fall, dass die Steuerwicklung nur noch zweiphasig betrieben wird, notwendig, dass der Phasenstrom oder die Phasenspannung in den beiden Strängen der Steuerwicklung unabhängig voneinander regelbar sind. Üblicherweise werden die Phasenströme oder die Phasenspannungen für die einzelnen Phasen von einer Verstärkereinheit bereitgestellt, die in der Stelleinrichtung enthalten ist.

Bei einer ersten bevorzugten Ausführungsform umfassen die Mittel zum unabhängigen Regeln der Stellgrösse (Phasenstrom oder Phasenspannung) einen belastbaren Sternpunkt, mit dem jede Phase verbunden ist, und der auf ein Potential gelegt ist, welches zwischen den beiden Betriebspotentialen der Verstärkereinheit liegt. Bei üblichen dreiphasigen Steuerwicklungen sind die drei Stränge jeweils mit einem gemeinsamen Sternpunkt verbunden, wobei die Bedingung erfüllt sein muss, dass die Summe der Phasenströme im Sternpunkt Null ist. Durch die Massnahme, den Sternpunkt belastbar zu machen, das heisst ihn auf ein belastbares Potential zu legen, kann diese Bedingung aufgehoben werden, sodass jeder Phasenstrom bzw. jede Phasenspannung unabhängig von den anderen regelbar ist.

Bei einer zweiten bevorzugten Ausführungsform umfasst die Verstärkereinheit als Mittel zum unabhängigen Regeln der Stellgrösse (Phasenstrom oder Phasenspannung) einen separaten Leistungsverstärker für jede Phase, wobei die separaten Leistungsverstärker insbesondere als H-Brückenschaltung ausgestaltet sind. Auch diese Massnahme ermöglicht ein unabhängiges Regeln der einzelnen Phasenströme oder Phasenspannungen.

Gemäss einem weiterführenden Aspekt der Erfindung hat die magnetische Lagervorrichtung mindestens drei Positionssensoren zum Bestimmen der radialen Position des Körpers in einem Statorsystem, das bezüglich des Stators ortsfest ist. Da prinzipiell zwei Positionssensoren ausreichen, um die radiale Position des Körpers im Statorsystem zu bestimmen, lässt sich durch die Verwendung von mindestens drei Positionssensoren eine Fehlertoleranz der Positionssensorik, welche wesentlich für die Regelung der Position des Körpers und damit den Betrieb der Lagervorrichtung ist, erreichen. Beim Ausfall eines Positionssensors ist nämlich die radiale Position des Körpers immer noch eindeutig mittels der verbleibenden Positionssensoren möglich. Dies bedeutet eine weitere Erhöhung der Betriebssicherheit der magnetischen Lagervorrichtung.

Vorzugsweise ist eine Positionseinheit vorgesehen, welche die Signale der Positionssensoren mittels einer Transformation in ein zweikomponentiges Positionssignal umwandelt, dessen eine Komponente die X-Koordinate und dessen andere Komponente die Y-Koordinate des Körpers im Statorsystem repräsentiert.

Bei einer bevorzugten Ausführungsform sind die drei Positionssensoren so angeordnet, dass jeweils zwei benachbarte Positionssensoren bezüglich der Umfangsrichtung des Stators um einen Winkel von 120° zueinander versetzt sind. Bei dieser Anordnung ist es nämlich auf besonders einfache Weise möglich, den Ausfall eines Positionssensors zu kompensieren. Falls der defekte Positionssensor das Signal Null liefert, ist prinzipiell überhaupt keine Massnahme zur Kompensation notwendig. Die Transformation in das zweikomponentige Positionssignal kann mit unveränderter Transformationsmatrix durchgeführt werden und führt dennoch zu einer korrekten Positionsregelung.

Vorzugsweise überwacht die Positionseinheit das Funktionieren der Positionssensoren. Dies kann beispielsweise so erfolgen, dass die Positionseinheit für jeden Positionssensor überprüft, ob das von ihm gelieferte Signal oder der Mittelwert mehrerer seiner Signale innerhalb eines vorgebbaren Toleranzbereichs liegt.

Detektiert die Positionseinheit bei der oben erwähnten 120°-Anordnung der Positionssensoren das Auftreten eines Fehlers, so setzt sie das Signal des zugehörigen Positionssensors vor der Transformation auf Null und führt dann die Transformation mit der gleichen Transformationsmatrix durch wie im Falle, dass alle Positionssensoren korrekt arbeiten.

Falls der Winkel zwischen benachbarten Positionssensoren nicht 120° beträgt, so ist im allgemeinen beim Ausfall eines Positionssensors eine Änderung der Transformation notwendig, um eine korrekte Positionsregelung zu gewährleisten.

Gemäss einer anderen ebenfalls bevorzugten Ausführungsform überwacht die Positionseinheit mittels des Signals von mindestens einem der Positionssensoren die Funktion der anderen Positionssensoren.

Sind beispielsweise drei Positionssensoren vorgesehen, so ist es möglich, , zum Bestimmen des zweikomponentigen Positionssignals, also bei der Transformation, jeweils nur zwei der drei Sensorsignale zu verwenden und mittels des dritten Sensorsignals zu überprüfen, ob die anderen Positionssensoren ordnungsgemäss arbeiten.

Im Falle des Auftretens eines Fehlers bei einem Positionssensor kann dann die Positionseinheit eine andere Transformation zur Bestimmung des Positionssignals auswählen, in welche nur die Signale von fehlerfreien Positionssensoren eingehen.

Diese Massnahme, einen Positionssensor zum Überwachen der anderen Positionssensoren zu verwenden, ist prinzipiell für alle beliebigen Winkel zwischen benachbarten Positionssensoren möglich (mit Ausnahme der Winkel von 0° und 180°). Im Hinblick auf eine einfache Auswertung der Sensorsignale sind die drei Positionssensoren jedoch vorzugsweise derart angeordnet, dass der in Umfangsrichtung des Stators betrachtete Winkel zwischen dem ersten und dem zweiten Positionssensor sowie der Winkel zwischen dem zweiten und dem dritten Positionssensor jeweils 45° oder 60° beträgt.

Eine weitere vorteilhafte Massnahme besteht darin, dass jeder Positionssensor zwei Sensorelemente umfasst, die bezüglich der Umfangsrichtung des Stators um 180° versetzt zueinander angeordnet sind. Dadurch lassen sich nämlich systematische Fehler wie Offsets oder thermische Driften durch jeweilige Differenzbildung der Signale der zum gleichen Positionssensor gehörenden Sensorelemente kompensieren.

In einer bevorzugten Ausführungsform ist die magnetische Lagervorrichtung als lagerloser Motor ausgebildet, bei welchem der Stator als Lager- und Antriebsstator ausgestaltet ist und der Körper der Rotor des lagerlosen Motors ist. Hierdurch ist nämlich ein lagerloser Motor möglich, der gegenüber Fehlern weniger anfällig ist und somit eine erhöhte Betriebssicherheit aufweist. Dies ist insbesondere für sensible Anwendungen des lagerlosen Motors, wie beispielsweise Blutpumpen, ein grosser Vorteil.

Besonders bevorzugt ist dabei der Rotor scheiben- oder ringförmig ausgestaltet.

Weitere vorteilhafte Massnahmen und bevorzugte Ausgestaltungen der Erfindung ergeben sich aus den abhängigen Ansprüchen.

Im folgenden wird die Erfindung anhand von Ausführungsbeispielen und anhand der Zeichnung näher erläutert. In der Zeichnung sind identische oder von der Funktion her gleichwertige Teile mit den gleichen Bezugszeichen versehen. In der schematischen, nicht massstäblichen Zeichnung zeigen:

Fig. 1:    einen Querschnitt durch einen Stator eines ersten Ausführungsbeispiels der erfindungsgemässen magnetischen Lagervorrichtung,

Fig. 2:    einen Schnitt durch den Stator aus Fig. 1 entlang der Schnittlinie II-II in Fig. 1,

Fig. 3:    eine symbolische Blockdarstellung des ersten Ausführungsbeispiels

Fig. 4-7:    Darstellungen zur Illustration von Transformationen zwischen verschiedenen Systemen mit den zugehörigen Transformationsmatrizen,

Fig. 8:    einen elektrischen Schaltplan einer Verstärkereinheit für die Versorgung der Steuerwicklung des Stators,

Fig. 9:    einen elektrischen Schaltplan eines separaten Leistungsverstärkers für die Versorgung einer Phase der Steuerwicklung des Stators,

Fig. 10:    eine schematische Darstellung der Anordnung von drei Positionssensoren,

Fig. 11:    wie Fig. 1, jedoch für eine Variante des ersten Ausführungsbeispiels,

Fig. 12:    eine schematische Darstellung der Anordnung von drei Positionssensoren in einem zweiten Ausführungsbeispiel der magnetischen Lagervorrichtung, und

Fig. 13:    eine schematische Darstellung der Positionseinheit des zweiten Ausführungsbeispiels.

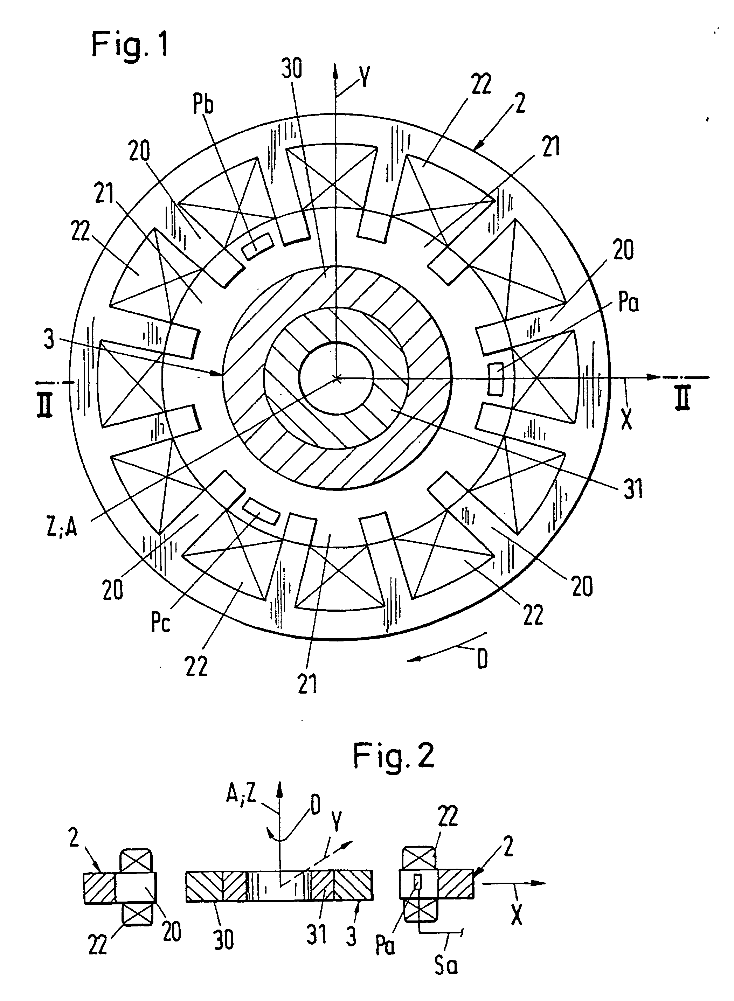

Die erfindungsgemässe magnetische Lagervorrichtung zum Lagern eines Körpers 3 (Fig. 1) umfasst einen Stator 2 mit mindestens einer Steuerwicklung 22, mit der ein magnetisches Steuerfeld erzeugbar ist, mit welchem die Position des zu lagernden Körpers 3 bezüglich des Stators 2 regelbar ist.

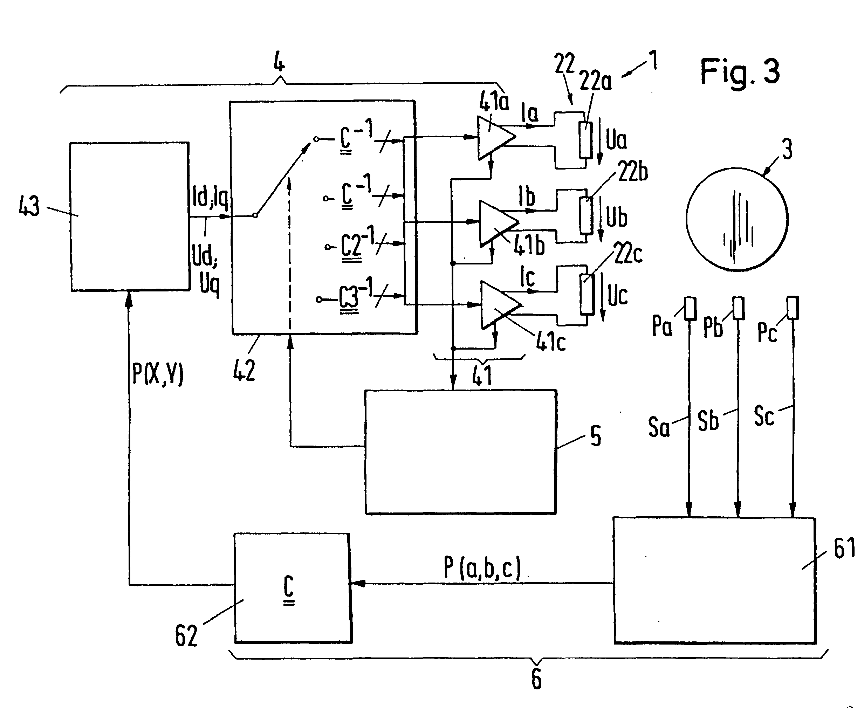

Fig. 1 zeigt in einer Querschnittdarstellung den Stator 2 eines ersten Ausführungsbeispiels der erfindungsgemässen magnetischen Lagervorrichtung. Zum besseren Verständnis zeigt Fig. 2 noch einen Schnitt durch den Stator 2 entlang der Schnittlinie II-II in Fig. 1. In Fig. 3 ist das erste Ausführungsbeispiel der erfindungsgemässen magnetischen Lagervorrichtung, die gesamthaft mit dem Bezugszeichen 1 bezeichnet ist, in einer symbolischen Blockdarstellung illustriert, wobei der Stator 2 in Fig. 3 nicht dargestellt ist.

Der in den Fig. 1 und 2 dargestellten Stator 2 ist beispielsweise der Lager-Antriebsstator eines lagerlosen Motors in dem eingangs erklärten Sinne. Die ebenfalls auf den Stator gewickelte Antriebswicklung, deren Polpaarzahl sich um eins von der Polpaarzahl der Steuerwicklung 22 unterscheidet, ist jedoch nicht gesondert dargestellt und wird im Folgenden auch nicht näher behandelt, da sie für das Verständnis der Erfindung unwesentlich ist. Der Stator 2 kann aber ebenso gut auch der Stator einer solchen magnetischen Lagervorrichtung sein, wie sie in der bereits zitierten WO-A-97/07340 offenbart ist.

Im Folgenden wird mit beispielhaftem Charakter auf den Fall Bezug genommen, dass der zu lagernde Körper 3 ein Rotor 3 ist. Dies kann beispielsweise der Lager-Antriebsrotor eines lagerlosen Motors oder eine zu lagernde rotierende Welle sein. Die Soll-Drehachse, womit diejenige Achse gemeint ist, um die der Rotor 3 im Betriebszustand rotiert, wenn er sich in einer exakt zentrierten Position (Soll-Position) bezüglich des Stators 2 befindet, so wie dies in den Fig. 1 und 2 dargestellt ist, wird im folgenden einfach als Drehachse A bezeichnet. Die Drehrichtung ist durch den Pfeil D angedeutet.

Es sei jedoch betont, dass die Erfindung nicht auf solche Fälle beschränkt ist, bei denen der zu lagernde Körper 3 rotiert. Die Erfindung ist auch für die Lagerung nicht rotierender, beispielsweise schwebender Körper 3 geeignet.

Für die Beschreibung von magnetischen Lagervorrichtungen, insbesondere für ihre mathematische Beschreibung, wird üblicherweise ein Statorsystem verwendet, das wie folgt festgelegt ist. Das Statorsystem ist ein kartesisches Koordinatensystem mit den Koordinatenachsen X,Y,Z (siehe Fig. 1 und 2), das bezüglich des Stators 2 ortsfest ist, und dessen Ursprung im Zentrum des Stators 2 liegt, das heisst im geometrischen Mittelpunkt des vom Stator 2 umgebenen Raums. Definitionsgemäss zeigt die Z-Achse in Richtung der Drehachse A des Rotors 3, bzw. steht sie bei einem nicht rotierenden Körper senkrecht auf der Ebene, bezüglich welcher der Stator 2 den Körper 3 lagert. Bei der Darstellung gemäss Fig. 1 steht die Z-Achse senkrecht auf der Zeichenebene. Die Richtung der Z-Achse wird im folgenden als axiale Richtung bezeichnet. Die Festlegung der X- und der Y-Achse des Statorsystems in der zur Z-Achse senkrechten Ebene, die den Ursprung enthält, ist willkürlich. Die durch die X- und die Y-Achse aufgespannte X-Y-Ebene ist die Ebene, in welcher der Rotor 3 im Betrieb rotiert, falls er nicht verkippt oder in axialer Richtung ausgelenkt ist. Die Position des Rotors 3 oder allgemein des zu lagernden Körpers 3 bezüglich der X-Y-Ebene wird im Folgenden als seine radiale Position bezeichnet.

Der Stator 2 gemäss Fig. 1 und 2 ist als gezahnter Stator 2 mit mehreren radial in Richtung auf den Rotor 3 verlaufenden Statorzähnen 20 mit dazwischen liegenden Lücken 21 ausgestaltet. Der Rotor 3 ist als ringförmiger permanentmagnetischer Rotor 3 ausgestaltet mit einem permanentmagnetischen Ring 30 und einem Eisenrückschluss 31, der radial innenliegend bezüglich des permanentmagnetischen Rings 30 angeordnet ist. Der Rotor 3 kann aber beispielsweise auch scheibenförmig ausgestaltet sein.

Ferner sind drei Positionssensoren Pa,Pb und Pc zum Bestimmen der radialen Position des Rotors 3 vorgesehen, die über Signalleitungen Sa,Sb,Sc (siehe auch Fig. 3) mit einer Positionseinheit 6 verbunden sind, worauf weiter hinten noch näher eingegangen wird. Die Positionssensoren Pa, Pb, Pc sind hier jeweils in einer Lücke 21 zwischen zwei benachbarten Statorzähnen 20 angeordnet. Alternativ is es auch möglich, die Positionssensoren Pa, Pb,Pc jeweils auf dem radial inneren Ende eines Statorzahns 20 anzubringen.

Um die Statorzähne 20 herum ist die Steuerwicklung 22 zum Erzeugen des magnetischen Steuerfelds gewickelt, die in den Fig. 1 und 2 nur symbolisch angedeutet ist. Insbesondere sind die einzelnen elektrischen Leitungen der Steuerwicklung nicht dargestellt. Die Steuerwicklung weist mindestens drei Stränge 22a,22b,22c (Fig. 3) auf, wobei jeder Strang 22a,22b,22c zu einer anderen elektrischen Phase gehört, das heisst die Steuerwicklung 22 ist mindestens dreiphasig ausgestaltet. Im Folgenden wird auf den für die Praxis besonders wichtigen Fall Bezug genommen, dass die Steuerwicklung 22 genau dreiphasig, also mit drei Strängen 22a,22b,22c ausgestaltet ist. Die Erläuterungen gelten aber in sinngemäss gleicher Weise auch für den allgemeineren Fall einer n-phasigen (mit n > 3) Steuerwicklung.

Die Steuerwicklung 22 ist in an sich bekannter Weise um die einzelnen Statorzähne 20 herum gewickelt und bildet somit mehrere diskrete Spulen zum Erzeugen des magnetischen Steuerfelds. Dabei können mehrere diskrete Spulen elektrisch in einer Parallelschaltung oder einer Serienschaltung miteinander verbunden sein. Die Gesamtheit aller der diskreten Spulen, die miteinander elektrisch parallel oder seriell verbunden sind, wird als ein Strang 22a oder 22b oder 22c der Steuerwicklung 22 bezeichnet. Natürlich sind auch solche Ausgestaltungen möglich, bei denen jeder Strang nur eine diskrete Spule umfasst.

Bei dem in Fig. 1 dargestellten Stator 2 kann beispielsweise um jeden Statorzahn 20 eine diskrete Spule gewickelt sein. Zählt man die Statorzähne von der X-Achse beginnend in Drehrichtung D, so können beispielsweise die diskreten Spulen des ersten, vierten, siebten und zehnten Statorzahns 20 als erster Strang 22a zusammengeschaltet sein, die diskreten Spulen des zweiten, fünften, achten und elften Statorzahns 20 als zweiter Strang 22b und die diskreten Spulen des dritten sechsten, neunten und zwölften Statorzahns 20 als dritter Strang 22c. Auch ist es beispielsweise möglich, jeweils die diskreten Spulen des ersten bis vierten Statorzahns, des fünften bis achten Statorzahns und des neunten bis zwölften Statorzahns zu einem Strang 22a, 22b bzw. 22c zusammenzuschalten. Diese Beschaltungen sollen jedoch nur beispielhaft zur Erläuterung des Begriffs Strang dienen. Je nach spezieller Ausgestaltung des Rotors und je nach speziellem Anwendungsfall sind noch zahlreiche andere Beschaltungen möglich.

Jeder Strang 22a,22b,22c der Steuerwicklung 22 bildet mit dem ihn versorgenden Teil einer Stelleinrichtung 4 (siehe Fig. 3) eine separate elektrische Phase. Die Stelleinrichtung 4 kann jeden Strang 22a,22b,22c mit jeweils einem Phasenstrom Ia,Ib,Ic oder einer Phasenspannung Ua,Ub,Uc als Stellgrösse versorgen. Die Stelleinrichtung 4 kann als Stromsteller oder als Spannungssteller für die Steuerwicklung 22 ausgestaltet sein, das heisst die Positionsregelung des Rotors 3 kann als Stromregelung oder alternativ auch als Spannungsregelung ausgelegt sein. Da in der Praxis jedoch meistens Stromregelungen Verwendung finden, wird im folgenden auf eine Stromregelung Bezug genommen. Für eine Spannungsregelung gelten jedoch sinngemäss die gleichen Erläuterungen.

Bei der dreiphasigen Ausgestaltung der Steuerwicklung 22 beträgt die Phasenverschiebung zwischen den Phasenströme Ia,Ib,Ic - wie dies auch bei technischem Drehstrom üblich ist - jeweils 120°.

Der normale Betriebszustand des ersten Ausführungsbeispiels der Lagervorrichtung 1, der als erster Betriebsmodus bezeichnet wird, lässt sich grob wie folgt beschreiben (Fig. 3). Mittels der Steuerwicklung 22 wird das magnetische Steuerfeld generiert, das bei einem rotierenden Rotor 3 üblicherweise ein magnetisches Drehfeld ist, und mit dem die radiale Position des Rotors 3 in an sich bekannter Weise regelbar ist. Mittels der Positionssensoren Pa, Pb,Pc und der Positionseinheit 6 wird in noch zu erläuternder Weise ein zweikomponentiges Positionssignal P(X,Y) generiert, dessen eine Komponente die X-Koordinate und dessen andere Komponente die Y-Koordinate des Rotors 3 im Statorsystem repräsentiert. Mittels dieses Positionssignals P(X,Y) bestimmt die Stelleinrichtung 4, die einen Positionsregler 43, eine Transformationseinheit 42 und eine Verstärkereinheit 41 umfasst, die momentane Abweichung von der radialen Soll-Position des Rotors 3 und regelt dann die drei Phasenströme Ia,Ib,Ic derart, dass das resultierende magnetische Steuerfeld den Rotor 3 wieder in seine radiale Soll-Position bewegt bzw. den Rotor 3 in seiner radialen Soll-Position hält.

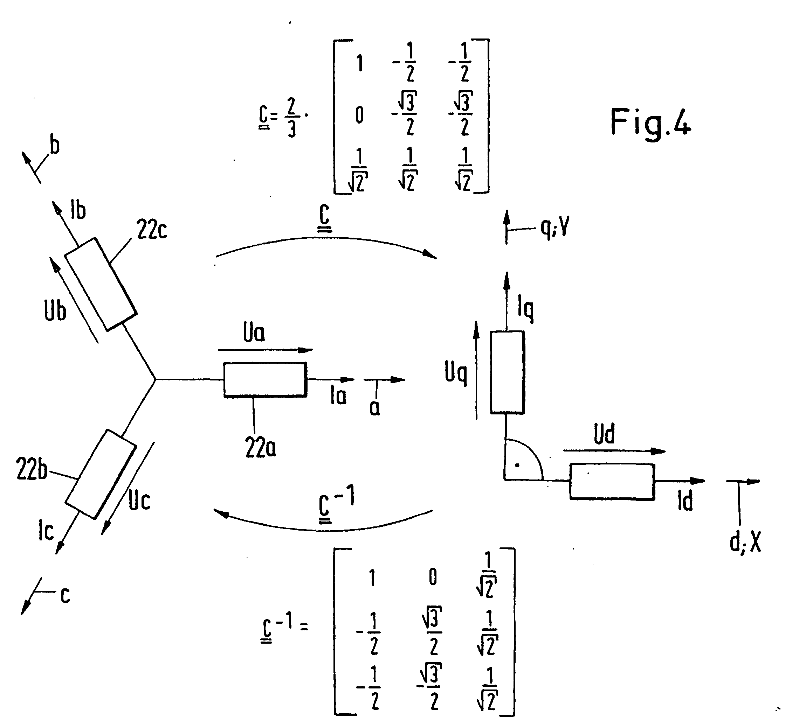

Bevor nun die Erfindung weiter erläutert wird, werden anhand der Fig. 4-7 für das Verständnis notwendige Transformationen erklärt. Es ist aus der Theorie der elektrischen Drehfeldmaschinen bekannt, dass bei einer Vektordarstellung der elektrischen Maschine eine dreiphasige Maschine oder im allgemeinen eine n-phasige Maschine anhand einer zweiphasigen Ersatzmaschine betrachtet werden kann. Die mathematische Transformation für die Umwandlung aus dem Dreiphasensystem oder im allgemeinen aus dem n-Phasensystem in das Ersatzsystem, das ein Zweiphasensystem ist, bzw. die umgekehrte Transformation, ist als Park-Transformation bekannt. Der grosse Vorteil der Zweiphasendarstellung liegt darin, dass die Maschinengrössen, wie im vorliegenden Fall z. B. die Ströme oder die Spannungen, als ebene Vektoren in einem rechtwinkligen kartesischen Koordinatensystem, dessen Achsen üblicherweise mit d und q bezeichnet werden, dargestellt werden können. Fig. 4 illustriert diese Transformation für die magnetische Lagervorrichtung 1 mit der dreiphasigen Steuerwicklung 22, welche die Stränge 22a,22b und 22c umfasst. Des einfacheren Verständnisses wegen wird ferner ohne Beschränkung der Allgemeinheit vorausgesetzt, dass die geometrische Anordnung der Steuerwicklung 22 so ist, dass die d-Achse mit der X-Achse des Statorsystems zusammenfällt.

Dann fällt die q-Achse mit der Y-Achse des Statorsystems zusammen. In Fig. 4 sind die Achsen des Dreiphasensystems mit a,b,c bezeichnet und die Phasenströme bzw. die Phasenspannungen mit Ia,Ib,Ic bzw. Ua,Ub,Uc. Die entsprechenden Ersatzgrössen im Zweiphasensystem sind mit Id,Iq bzw. Ud,Uq bezeichnet. In Fig. 4 sind auch die beiden Transformationsmatrizen $\underline{C}$ und $\underline{C}^{-1}$ angegeben , welche die Transformation vom Drei- in das Zweiphasensystem bzw. vom Zwei- in das Dreiphasensystem beschreiben. Diese Transformationen werden im Folgenden kurz als 3-2-Transformation bzw. als 2-3-Transformation bezeichnet. Für die Phasenströme Ia,Ib,Ic gilt also die folgende Beziehung:

$$\begin{bmatrix} Ia \\ Ib \\ Ic \end{bmatrix} = \underline{\underline{C}}^{-1} \cdot \begin{bmatrix} Id \\ Iq \\ 0 \end{bmatrix} \qquad \text{bzw.} \qquad \begin{bmatrix} Id \\ Iq \\ 0 \end{bmatrix} = \underline{\underline{C}} \cdot \begin{bmatrix} Ia \\ Ib \\ Ic \end{bmatrix}$$

Die letzte Zeile der Matrix $\underline{C}$ bzw. die Null in dem Vektor für die Phasenströme Id, Iq im Zweiphasensystem dient dabei nur der Invertierbarkeit. Analoge Beziehungen gelten auch für die Phasenspannungen.

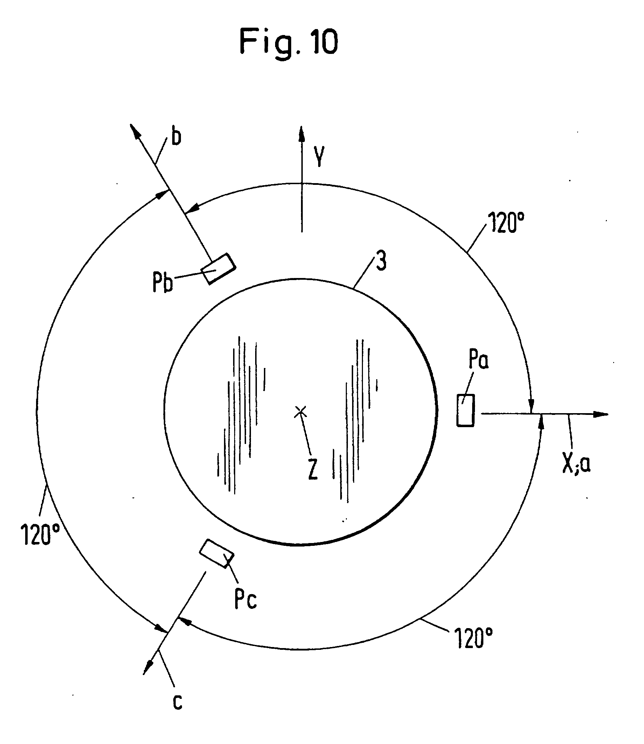

Die Regelung der radialen Position des Rotors 3 erfolgt normalerweise in dem kartesischen Statorsystem. Auch die Berechnung der für die Regelung der radialen Position benötigten Phasenströme bzw. Phasenspannungen erfolgt zunächst in einem zweiphasigen kartesischen Koordinatensystem, nämlich dem durch die d- und q-Achse festgelegten d-q-System, so wie dies beispielsweise in der WO-A-97/07340 anhand der Fig. 10 erläutert ist. Durch eine 2-3-Transformation (Park-Transformation) werden anschliessend die drei Phasenströme Ia,Ib,Ic im Dreiphasensystem (a,b,c-System) berechnet und in die Steuerwicklung 22 eingeprägt.

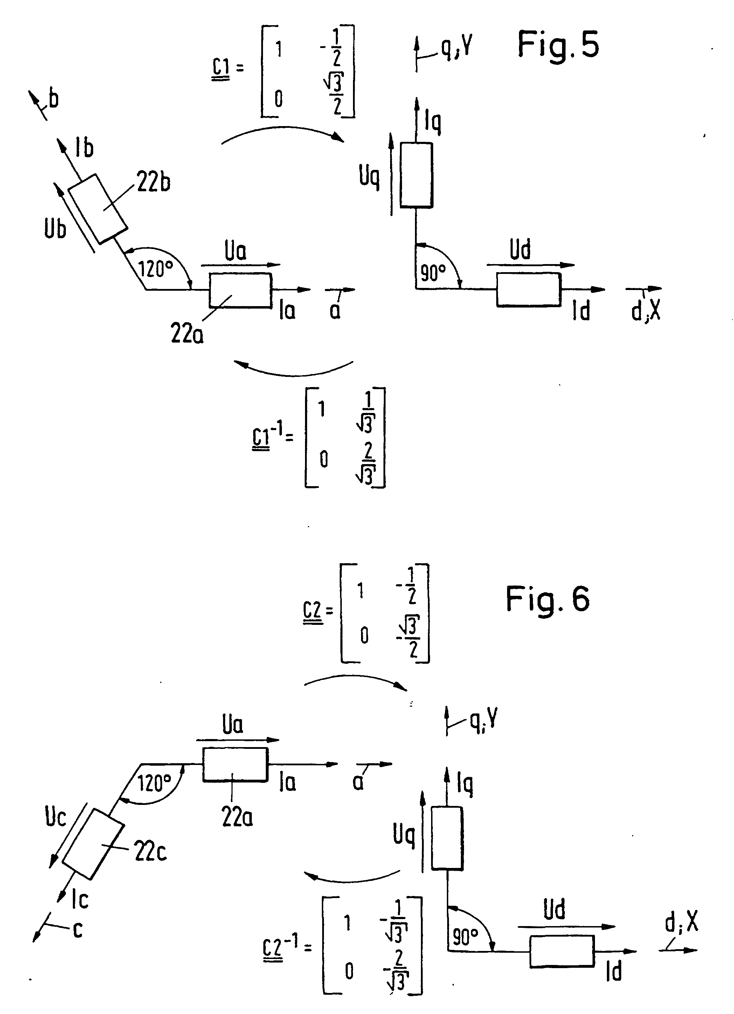

Bei bekannten magnetischen Lagervorrichtungen (siehe z. B WO-A-97/07340) wird als Nebenbedingung bei der Parktransformation vorausgesetzt, dass die Summe der Phasenströme Ia+Ib+Ic und die Summe der Phasenspannungen Ua+Ub+Uc Null ist. Aufgrund dieser Nebenbedingung kann ein Magnetlager gemäss der WO-A-97/07340 bzw. ein lagerloser Motor gemäss der WO-A-95/18925 mit einem dreiphasigen handelsüblichen Drehstromsteller betrieben werden. Die drei Phasen werden dabei in einer Sternpunktschaltung betrieben (siehe z. B. Fig. 5b der WO-A-97/07340). Die obengenannte Nebenbedingung ist dann nichts anderes als die bekannte Sternpunktbedingung, dass die Summe der Phasenströme im Sternpunkt Null sein muss. Diese Nebenbedingung Ia+Ib+Ic=0 bzw. Ua+Ub+Uc=0 zu erfüllen, ist aber nur möglich, weil die allgemeine Transformation aus einem Zweiphasensystem in ein Dreiphasensystem nicht eindeutig bestimmt ist. Das zugehörige Gleichungssystem beinhaltet nämlich bei einer Transformation vom d,q nach a,b,c nur zwei Gleichungen, aber drei Unbekannte.

Die Erfindung basiert nun auf der Idee, dass aufgrund der im allgemeinen Fall (das heisst ohne Nebenbedingung) nicht eindeutigen Transformation zwischen dem Zwei- und dem Dreiphasensystem, ein Dreiphasensystem oder auch ein System mit n Phasen (n>3) mit lediglich zwei Phasen betrieben werden kann, ohne dass dafür Zugeständnisse an das ordnungsgemässe Funktionieren der magnetischen Lagervorrichtung vonnöten sind, vorausgesetzt man lässt die Nebenbedingung Ia+Ib+Ic=0 fallen. Erfindungsgemäss ist also bei der magnetischen Lagervorrichtung ein zweiter Betriebsmodus möglich, in welchem eine im Vergleich zum ersten Betriebsmodus reduzierte Anzahl von Phasen, die mindestens zwei ist, das magnetische Steuerfeld erzeugt. Mit diesen zwei Phasen kann nämlich das gleiche Steuerfeld, meistens ein Drehfeld, erzeugt werden wie mit drei oder mehr Phasen. Voraussetzung dafür ist aber, dass die einzelnen Phasenströme Ia, Ib bzw. Ic frei regelbar sind, das heisst, für jeden Strang 22a, 22b oder 22c muss der jeweilige Phasenstrom Ia,Ib oder Ic unabhängig von den anderen Phasenströmen regelbar sein. Wie dies technisch realisierbar ist, wird weiter hinten erläutert.

Da das magnetische Steuerfeld mit zwei Phasen erzeugbar ist, kann eine erfindungsgemässe Lagervorrichtung, deren Stator 2 im allgemeinen Fall eine n-phasige Steuerwicklung 22 aufweist, auch dann noch zuverlässig betrieben werden, wenn n-2 Phasen der Steuerwicklung ausfallen. Da es für das Verständnis ausreicht, wird im Folgenden nur noch der Fall einer dreiphasigen Steuerwicklung 22 beschrieben.

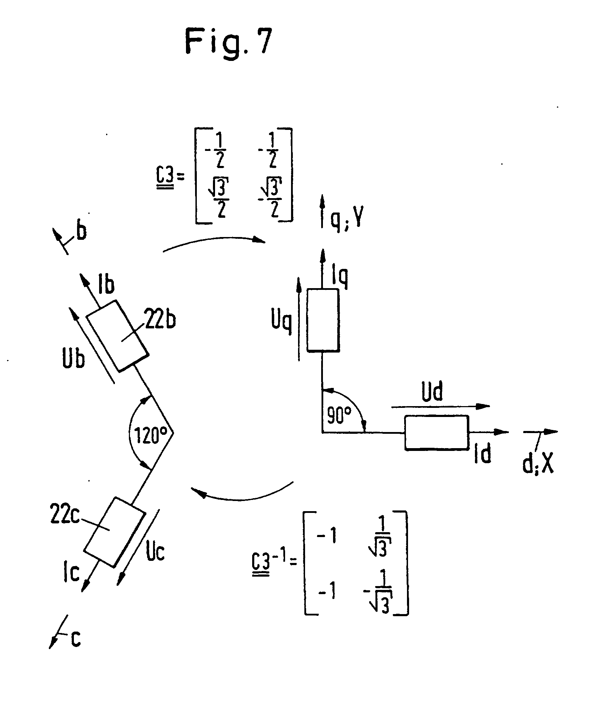

In den Fig. 5,6 und 7 sind die drei Transformationen zwischen dem a,b,c-System und dem d,q-System für die drei möglichen Fälle illustriert, dass nur zwei der drei Phasenströme Ia,Ib,Ic bzw. Phasenspannungen Ua,Ub,Uc - also nur zwei der drei Stränge 22a,22b,22c - für die Erzeugung des magnetischen Steuerfelds verwendet werden. Fig. 5 zeigt den Fall, dass nur die Phasenstöme Ia,Ib (Strang 22a und Strang 22b) zum Erzeugen des magnetischen Steuerfelds verwendet werden, Fig. 6 den Fall, dass nur die Phasenströme Ia,Ic (Stang 22a und Strang 22c) verwendet werden und Fig. 7 den Fall, dass nur die Phasenströme Ib,Ic (Strang 22b und Strang 22c) verwendet werden. Die zugehörigen Transformationsmatrizen $\underline{C}1$ bzw. $\underline{C}1^{-1}$(Fig. 5), $\underline{C}2$ bzw. $\underline{C}2^{-1}$ (Fig. 6) und $\underline{C}3$ bzw. $\underline{C}3^{-1}$ für die jeweilige Transformation bzw. Rücktransformation sind jeweils angegeben.

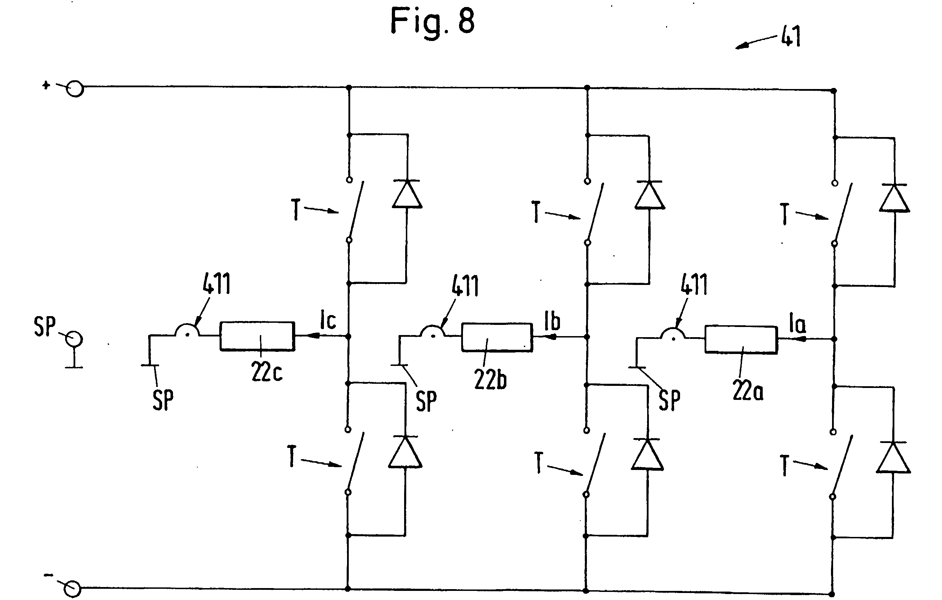

Um die drei Phasenströme Ia,Ib,Ic unabhängig voneinander regeln zu können, umfasst die Stelleinrichtung 4 in einer ersten bevorzugten Ausführungsform eine Verstärkereinheit 41, deren elektrische Schaltung in Fig. 8 dargestellt ist. Die Verstärkereinheit 41 ist Teil eines dreiphasigen Drehstromstellers, von dem in Fig. 8 nur der Leistungsteil dargestellt ist. Für jeden Strang 22a,22b,22c ist ein Brückenzweig vorgesehen, der in an sich bekannter Weise mittels Schalttransistoren T und Freilaufdioden den zugehörigen Strang 22a,22b,22c mit dem jeweiligen Phasenstrom Ia,Ib, Ic versorgt. Die Verstärkereinheit 41 wird mit zwei Betriebspotentialen betrieben, die in Fig. 8 mit + und - bezeichnet sind. Diese Betriebspotentiale +,- sind Gleichspannungspotentiale. Falls die Stelleinrichtung 4 als Umrichter ausgestaltet ist, so ist die Spannung zwischen den beiden Betriebspotentialen +,- z. B. die Zwischenkreisspannung des Umrichters.

Jeder Strang 22a,22b,22c ist einerseits mit dem ihn versorgenden Brückenzweig der Verstärkereinheit 41 verbunden und andererseits mit einem belastbaren Potential SP, das für alle drei Stränge 22a,22b,22c gleich ist. Dieses belastbare Potential SP liegt zwischen den beiden Betriebspotentialen +,- der Verstärkereinheit 41 und ist in dem in Fig. 8 gezeigten Beispiel das Erdpotential. Die drei Stränge 22a, 22b, 22c sind also in einer Sternpunktschaltung geschaltet, wobei jedoch der Sternpunkt belastbar ist, das heisst mit einem belastbaren Potential SP verbunden ist, sodass, abgesehen von den drei Phasenströmen Ia,Ib,Ic, ein zusätzlicher Strom über den Sternpunkt abfliessen bzw. in diesen hineinfliessen kann. Das bedeutet, die übliche Sternpunktbedingung, dass die Summe der Phasenströme Ia,Ib,Ic im Sternpunkt immer Null sein muss, ist bei dieser Schaltung nicht mehr notwendig. Dies hat zur Folge, dass jeder Phasenstrom Ia,Ib,Ic vollkommen unabhängig von den anderen Phasenströmen geregelt werden kann. In den einzelnen Phasen ist jeweils ein Strommessgerät 411 zur Bestimmung der einzelnen Phasenströme la,lb,lc vorgesehen.

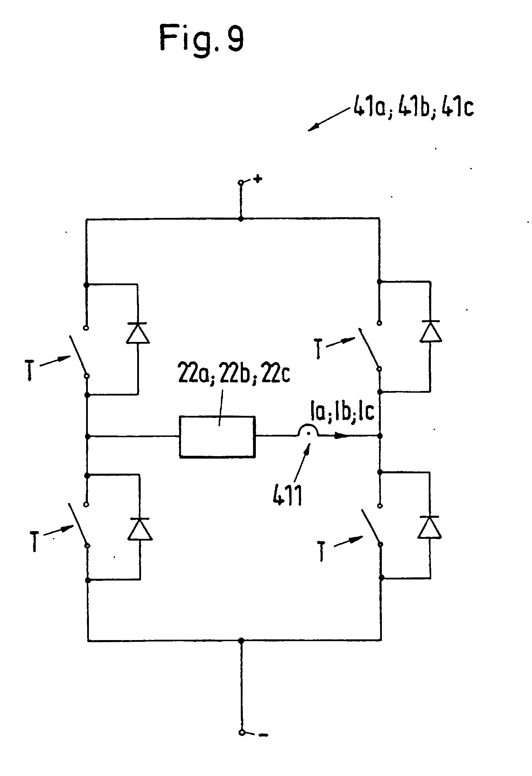

Fig. 9 verdeutlicht eine zweite ebenfalls bevorzugte Ausführungsform der Verstärkereinheit 41, die eine unabhängige Regelung der einzelnen Phasenströme la,lb,lc ermöglicht. Bei dieser Ausführungsform ist in der Verstärkereinheit 41 der Stelleinrichtung 4 für jede Phase bzw. für jeden Strang 22a, 22b, 22c ein separater Leistungsverstärker 41a, 41b, 41c vorgesehen. Fig. 9 zeigt den elektrischen Schaltplan eines solchen Leistungsverstärkers 41a,41b,41c. Dieser ist als H-Brückenschaltung mit den Schalttransistoren T und Freilaufdioden ausgestaltet und wird mit den beiden Betriebspotentialen + und - betrieben. Zum Messen der jeweiligen Phasenströme Ia, Ib,Ic ist wiederum in jeder Phase ein Strommessgerät 411 vorgesehen.

Die Signalverarbeitungs- und Regelvorrichtungen, die in der üblicherweise als integrierte Schaltung ausgestalteten Verstärkereinheit 41 integriert sind, sind in den Fig. 8 und 9 nicht dargestellt.

Es sind natürlich auch noch andere Ausgestaltungen der Verstärkereinheit 41 möglich. Wichtig ist jedoch, dass die Verstärkereinheit 41 so ausgebildet ist, dass sie in allen vier Quadranten betreibbar ist, und dass sie jede Phase mit jeweils einem Phasenstrom la,lb,lc versorgen kann, der unabhängig von den anderen Phasenströmen regelbar ist.

Wie bereits erwähnt wird im ersten Betriebsmodus das magnetische Steuerfeld mit allen drei Phasen, das heisst mit allen drei Strängen 22a,22b,22c generiert. Die Positionseinheit 6 (siehe Fig. 3) liefert das Positionssignal P (X,Y) an den Positionsregler 43 der Stelleinrichtung 4. Dieser ermittelt daraus den Sollwert für die Phasenströme im Zweiphasensystem, nämlich Id und Iq. Diese beiden Werte werden an die Transformationseinheit 42 übergeben, die daraus mittels einer 2-3-Transformation (siehe Fig. 4) die Sollwerte für die drei Phasenströme la,lb,lc im Dreiphasensystem a,b,c bestimmt und diese an die Verstärkereinheit 41 liefert. Mittels dem Sollwert für die drei Phasenströme la, lb,lc regelt die Verstärkereinheit dann die radiale Position des Rotors 3. Die Details dieser Regelung werden hier nicht näher erläutert. Sie sind beispielsweise in den bereits zitierten Druckschriften WO-A-95/18925 und WO-A-97/07340 beschrieben.

Das korrekte Funktionieren der einzelnen Phasen, das heisst insbesondere der einzelnen Stränge 22a,22b, 22c und der sie versorgenden Verstärkereinheit 41 wird dabei von einer Überwachungseinheit 5 überwacht. Falls in einer der Phasen ein Fehler auftritt, schaltet die Überwachungseinheit 5 die magnetische Lagervorrichtung 1 aus dem ersten Betriebsmodus in den zweiten Betriebsmodus. Dazu übermittelt die Überwachungseinheit 5 ein Steuersignal an die Transformationseinheit 42. In dieser wird dann die 2-3-Transformation mittels der Matrix $\underline{C}^{-1}$, welche aus dem Sollwert für die zweiphasigen Stellgrössen (Phasenströme Id,lq oder Phasenspannungen Ud,Uq im zweiphasigen d-q-System) den Sollwert für die dreiphasigen Stellgrössen (Phasenströme Ia,Ib,Ic oder Phasenspannungen Ua,Ub,Uc im dreiphasigen a,b,c-System) generiert, durch eine der Transformationen $\underline{C1}^{-1}$, $\underline{C2}^{-1}$, $\underline{C3}^{-1}$ (siehe Fig. 5-7) ersetzt, die den Sollwert für die Stellgrössen im rechtwinkligen d-q-System in den Sollwert in einem ebenfalls zweiphasigen System (a-b oder a-c oder b-c) umrechnet, dessen Achsen einen Winkel von 120° miteinander bilden. Dies ist dann eine 2-2-Transformation. Die gewählte 2-2-Transformation ist dann natürlich diejenige, in welche die fehlerbehaftete Phase nicht mehr eingeht. Detektiert die Überwachungseinheit 5 beispielsweise einen Fehler in der Wicklung 22b, so übermittelt sie ein Steuersignal an die Transformationseinheit 42, aufgrund dessen in der Transformationseinheit von der Matrix $\underline{C}^{-1}$ auf die Matrix $\underline{C2}^{-1}$ umgeschaltet wird. Im Folgenden wird dann das magnetische Steuerfeld zur Regelung der radialen Position des Rotors 3 nur noch zweiphasig mit den beiden fehlerfreien Phasen generiert. Im genannten Beispiel wird also im zweiten Betriebsmodus das Steuerfeld nur noch mit den Strängen 22a und 22c erzeugt. Somit ist auch beim Ausfall einer der Phasen noch ein zuverlässiges Funktionieren der magnetischen Lagervorrichtung 1 gewährleistet.

Vorrichtungen und Verfahren, mit welchen Fehler in den Leistungsverstärkern 41a,41b,41c (Fig. 9) oder in den einzelnen Brückenzweigen der Verstärkereinheit 41 (Fig. 8) detektiert werden können, sind hinreichend bekannt. Solche Fehler können beispielsweise sein: der Kurzschluss eines oder mehrerer Schalttransistoren T oder einer oder mehrerer der Freilaufdioden; der Unterbruch eines oder mehrerer Schalttransistoren T oder einer oder mehrerer der Freilaufdioden; Fehler in der Ansteuerung; zu hohe Temperatur usw. Die meist als integrierte Schaltungen ausgestalteten Ansteuerungen für die Schalttransistoren der Verstärkereinheit 41 enthalten üblicherweise bereits hardwaremässig solche Vorrichtungen zur Fehlerdetektion. Diese liefern dann ihre Signale an die Überwachungseinheit 5.

Mit solchen Vorrichtungen zur Fehlerdetektion können auch einige Fehler in den Strängen 22a,22b,22c der elektrischen Steuerwicklung 22 erkannt werden, wie beispielsweise ein Kurzschluss. Andere Fehler können aus den Phasenströmen la,lb,lc, die mittels der Strommessgeräte 411 (Fig. 8 und 9) bestimmbar sind und/oder aus den Phasenspannungen Ua,Ub,Uc ermittelt werden: z. B. ist bei einem Unterbruch in einem der Stränge 22a,22b,22c der zugehörige Phasenstrom Null, obwohl die Phasenspannung ungleich Null ist, oder bei einem Erdschluss ist die Summe der Phasenströme ungleich Null aber die Summe der Phasenspannungen gleich Null. Auch Wicklungsschlüsse, das heisst der unerwünschte Kontakt zwischen beispielsweise zwei Windungen, können anhand der Phasenströme und -spannungen erkannt werden, weil sie zu einer unsymmetrischen Stromverteilung bei symmetrischer Spannungsverteilung führen. Bei Schaltverstärkern (siehe Fig. 8 und 9), die vorzugsweise bei der erfindungsgemässen Vorrichtung eingesetzt werden, können die Phasenspannungen direkt aus dem Ansteuersignal (Pulsweitenmodulations-(PWM) -Signal) oder im allgemeinen aus dem Sollwert für die Phasenspannung gewonnen werden. Letzteres gilt auch bei der Verwendung von Analogverstärkern.

Natürlich können auch noch weitere Vorrichtungen vorgesehen sein, um das ordnungsgemässe Funktionieren der einzelnen Phasen zu überwachen. Diese Vorrichtungen sind dann mit der Überwachungseinheit 5 verbunden.

Der Positionsregler 43 (siehe Fig. 3), der die radiale Position des Rotors 3 kontrolliert, und den Sollwert für die Stellgrössen (Phasenstrom oder Phasenspannung) im zweiphasigen d-q-System Id,Iq bzw.Ud,Uq bereitstellt, kann, insbesondere bei einer dreiphasigen Ausgestaltung der Steuerwicklung 22, beispielsweise zwei getrennte PID-Regler, nämlich jeweils einen für die X-und die Y-Komponente im Statorsystem, umfassen, so wie dies z. B. in der Fig. 10 der WO-A-97/07340 dargestellt ist. Natürlich sind auch aufwendigere Ausgestaltungen des Positionsreglers 43 möglich, z. B solche die Zustandsregler umfassen. Für solche Positionsregler oder Magnetlagerregler sind aus der Literatur zahlreiche Ausgestaltungen bekannt. Ist die erfindungsgemässe Lagervorrichtung beispielsweise als lagerloser Motor ausgestaltet, so kann der Positionsregler 43 eine Regelstruktur gemäss Fig. 23 der WO-A-95/18925 aufweisen. In dieser Regelstruktur umfasst der Positionsregler 43 zusätzlich noch Drehtransformationen und Entkopplungsnetzwerke.

Im Folgenden wird nun noch eingehender beschrieben, wie die Positionssensorik mit den drei Positionssensoren Pa,Pb,Pc und der Positionseinheit 6 bei der erfindungsgemässen magnetischen Lagervorrichtung 1 vorzugsweise ausgestaltet sein kann. Prinzipill ist eine derartig ausgestaltete Positionssensorik jedoch nicht auf die erfindungsgemässe magnetische Lagervorrichtung 1 beschränkt, sondern kann in sinngemäss gleicher Weise auch für andere magnetische Lagervorrichtungen eingesetzt werden.

Auch bezüglich der Positionssensorik ist es die grundlegende Idee, mindestens drei Positionssensoren Pa, Pb,Pc vorzusehen, um so eine fehlertolerante Vorrichtung zum Bestimmen der radialen Position des Rotors zu schaffen, das heisst beim Ausfall eines oder mehrerer Positionssensoren ist immer noch eine zuverlässige Bestimmung der radialen Position des Rotors 3 mit Hilfe der verbleibenden mindestens zwei Positionssensoren möglich. Prinzipell reicht nämlich das Signal von zwei Positionssensoren aus, um die radiale Position des Rotors 3 bezüglich der X-Y-Ebene des Statorsystems eindeutig zu bestimmen.

Wie bereits erwähnt und in Fig. 1 dargestellt, sind bei dem ersten Ausführungsbeispiel der erfindungsgemässen magnetischen Lagervorrichtung 1 drei Positionssensoren Pa,Pb,Pc vorgesehen, um die radiale Position des Rotors 3 bezüglich der X-Y-Ebene des Statorsystems zu ermitteln. Diese Positionssensoren Pa,Pb,Pc übermitteln ihre Signale an die Positionseinheit 6 (Fig. 3), welche daraus das zweikomponentige Positionssignal P(X,Y) bestimmt und an den Positionsregler 43 übermittelt. In Fig. 10 ist die Anordnung der drei Positionssensoren Pa,Pb,Pc in einer schematischen Darstellung wiedergegeben, wobei auf die Darstellung des Stators 2 aus Gründen der bessern Übersicht verzichtet wurde. Die drei Positionssensoren Pa,Pb,Pc sind in der X-Y-Ebene des Statorsystems derart angeordnet, dass jeweils zwei benachbarte Positionssensoren bezüglich der Umfangsrichtung des Stators 2 um einen Winkel von 120° zueinander versetzt sind. Bei der in Fig. 10 gezeigten Anordnung liegen die drei Positionssensoren Pa,Pb,Pc auf der a-, b- bzw. c-Achse des dreiphasigen a,b,c-Systems, dessen a-Achse mit der X-Achse des Statorsystems übereinstimmt. Natürlich ist es auch möglich, die Positionsensoren Pa,Pb,Pc in einer zur X-Y-Ebene parallelen Ebene anzuordnen. Als Positionssensoren Pa,Pb,Pc sind alle an sich bekannten Sensoren zum Bestimmen der radialen Position des Rotors 3 geeignet, insbesondere induktive Sensoren, Wirbelstromsensoren und Magnetfeldsonden wie Hall-Sensoren oder magnetoresistive Sonden.

Bei der in Fig. 10 gezeigten Anordnung repräsentiert das Signal des Positionssensor Pa die Komponente a der Rotorposition im dreiphasigen a,b,c-System; entsprechend repräsentieren die Sensoren Pb und Pc die Komponenten b bzw. c der Rotorposition im dreiphasigen a,b,c-System. Folglich gilt für die Beziehung zwischen dem Ortsvektor des Rotors 3 mit den Komponenten a,b,c im Dreiphasensystem und dem Ortsvektor im Statorsystem mit den Komponenten X und Y eine analoge Gleichung wie sie vorne für die Phasenströme Ia,Ib,Ic genannt wurde, nämlich:

$$
\begin{bmatrix} a \\ b \\ c \end{bmatrix} = \underline{C}^{-1} \cdot \begin{bmatrix} X \\ Y \\ 0 \end{bmatrix}
\qquad \text{bzw.} \qquad
\begin{bmatrix} X \\ Y \\ 0 \end{bmatrix} = \underline{C} \cdot \begin{bmatrix} a \\ b \\ c \end{bmatrix}
$$

mit der gleichen, in Fig. 4 angegebenen Transformationsmatrix $\underline{C}$ bzw. $\underline{C}^{-1}$. Die Null in dem Vektor mit den Komponenten X und Y ist dabei wiederum eingefügt worden, damit die Beziehung invertierbar ist. Sie kann hier aber auch zum Abgleichen eines Offsets dienen, wie weiter hinten noch erläutert wird.

Im Betrieb übermitteln die Positionssensoren Pa,Pb,Pc ihre Signale über die Signalleitungen Sa,Sb,Sc an die Positionseinheit 6 (Fig. 3), die daraus zunächst in einem ersten Block 61 ein dreikomponentiges Positionssignal P (a,b,c) mit den Komponenten a,b,c bestimmt, welches die Lage des Rotors 3 im Dreiphasensystem mit den Achsen a,b,c repräsentiert. Das Signal P(a,b,c) wird an einen zweiten Block 62 des Positionseinheit übermittelt, wo es mittels einer 3-2-Transformation mit der Matrix $\underline{C}$ in das zweikomponentige Positionssignal P(X,Y) umgewandelt wird, das dann an den Positionsregler 43 übermittelt wird.

Ergibt sich bei dieser 2-3-Transformation für die dritte Komponente des obengenannten Vektors [X,Y,0]$^T$ ein von Null verschiedener Wert, so deutet dies auf einen Offset in den Positionssensoren Pa,Pb,Pc hin. Folglich kann die dritte Komponente dieses Vektors, die normalerweise Null ist, dazu verwendet werden, um einen eventuell vorhandenen Offset abzugleichen.

Liefert nun einer der Positionssensoren Pa,Pb,Pc aufgrund eines Fehlers das Signal Null, so lässt sich die radiale Position des Rotors 3 immer noch eindeutig aus den Signalen der beiden anderen fehlerfreien Positionssensoren bestimmen. Im Prinzip wäre zu erwarten, dass man beim Ausfall eines Positionssensors Pa oder Pb oder Pc anstelle der Matrix $\underline{C}$ in dem zweiten Block 62 der Positionseinheit 6 dann die entsprechende der drei in den Fig. 5-7 angegebenen Matrizen $\underline{C1}$ , $\underline{C2}$, $\underline{C3}$ für die Transformation verwendet. Dies ist jedoch aus den folgenden Gründen nicht notwendig. Durch einen Vergleich der in den Fig. 5-7 angegebenen Matrizen mit der in Fig. 4 angegebenen Matrix ist zu erkennen, dass jede der Matrizen $\underline{Ci}$ mit i=1,2,3 eine Untermatrix der Matrix $\underline{C}$ ist. Ist beispielsweise der Positionssensor Pa mit einem Fehler behaftet und liefert ständig ein Nullsignal, so müsste für die Transformation die Matrix $\underline{C3}$ verwendet werden. Diese ergibt sich aus der Matrix $\underline{C}$ durch Streichen der ersten Spalte und der letzten Zeile und indem der Vorfaktor 2/3 der Matrix $\underline{C}$ durch 1 ersetzt wird. Verwendet man nun trotz des Fehlers im Positionssensor Pa die Matrix $\underline{C}$ und wendet diese auf den Ortsvektor im Dreiphasensystem mit den Komponenten a=0 (fehlerhaft) b und c an, so ist zwar die mittels der Matrix $\underline{C}$ berechnete Position in der X-Y-Ebene des Statorsystems nicht korrekt, das heisst die X- und die Y-Komponente des Positionssignals P(X,Y) entsprechen nicht der tatsächlichen momentanen Rotorposition, aber die Richtung der detektierten Auslenkung, die durch das Verhältnis von X-Komponente zu Y-Komponente bestimmt ist, entspricht noch der Richtung der tatsächlichen Auslenkung. Analoges gilt bei einem Fehler im Positionssensor Pb oder Pc.

Fällt also einer der Positionssensoren Pa,Pb,Pc aus und liefert ein Nullsignal, so wird dennoch die 3-2-Transformation in dem zweiten Block 62 der Positionseinheit 6 mittels der Matrix $\underline{C}$ durchgeführt, wobei eine der Eingangsgrössen a,b,c Null ist. Dies führt dazu , dass das Positionssignal P(X,Y) immer noch die korrekte Richtung der Auslenkung des Rotors 3 angibt, aber der Betrag der Auslenkung des Rotors nicht mehr korrekt ist. Für den geschlossenen Regelkreis der magnetischen Lagervorrichtung 1 bedeutet dies aber nur eine Änderung der Kreisverstärkung um einen Faktor 2/3. Eine robust ausgelegte Stelleinrichtung 4 kann diese Änderung der Verstärkung jedoch problemlos verkraften und die radiale Position des Rotors korrekt regeln.

Bei der hier beschriebenen Anordnung der Positionssensoren Pa,Pb,Pc, bei der jeweils benachbarte Positionssensoren in der X-Y-Ebenen des Statorsystems um 120° versetzt zueinander angeordnet sind, werden also eine Vielzahl von möglichen Fehlern in einem der Positionssensoren Pa,Pb oder Pc toleriert, ohne dass hierfür zusätzliche Massnahmen vonnöten sind. Das heisst die Regelung der radialen Position des Rotors 3 arbeitet auch dann noch ohne weitere Massnahmen zuverlässig, wenn einer der Positionssensoren mit einem Fehler behaftet ist. Dies gilt für alle die möglichen Fehler in einem Positionssensor Pa,Pb,Pc, die zur Folge haben, dass der entsprechende Positionssensor Pa oder Pb oder Pc ein Nullsignal liefert. Speziell bei Induktionssensoren, Wirbelstromsensoren oder magnetischen Sensoren ist die häufigste Fehlerursache ein Unterbruch oder ein Kurzschluss des Sensorkabels oder im Sensor selbst. Letzteres gilt insbesondere bei Induktions- und Wirbelstromsensoren, die Wicklungen aufweisen. Diese Fehlerursachen führen dazu, dass bei entsprechender Ausgestaltung der Betriebsschaltung das Signal des zugehörigen Positionssensors Null wird, sodass ein solcher Fehler ohne weitere Massnahme toleriert wird und das Funktionieren der Positionsregelung gewährleistet bleibt. Diese 120°-Anordnung der Positionssensoren Pa,Pb und Pc ermöglicht somit in sehr einfacher Weise eine Positionssensorik, die auch beim Ausfall eines der Positionssensoren Pa,Pb, Pc noch einwandfrei funktioniert.

Eine weiterführende Variante bezüglich der Positionssensorik besteht darin, dass der erste Block 61 (Fig. 3) der Positionseinheit 6 den Ausfall eines der Positionssensoren Pa,Pb oder Pc detektiert. Dies ist beispielsweise möglich, indem überwacht wird, ob die Sensorsignale sinnvoll sind. Dazu kann in dem ersten Block 61 eine Elektronik vorgesehen sein, die überprüft ob das über die Zeit gemittelte Signal jedes Positionssensors Pa,Pb,Pc innerhalb eines vorgebbaren Toleranzbereichs liegt. Die Zeitdauer, über die jeweils gemittelt wird, umfasst dabei mehrere Abtastperioden der Positionssensoren Pa,Pb,Pc. Detektiert der erste Block 61 einen Fehler bei einem der Positionssensoren Pa,Pb,Pc so wird das zugehörige Sensorsignal hardwaremässig oder softwaremässig auf Null gesetzt und die Kreisverstärkung entsprechend angepasst. Hat der erste Block 61 beispielsweise einen Fehler bei dem Positionssensor Pb detektiert, so setzt er die Komponente b des dreikomponentigen Positionssignals P(a,b,c) auf Null bevor er es an den zweiten Block 62 zur Transformation übermittelt und passt die Kreisverstärkung an.

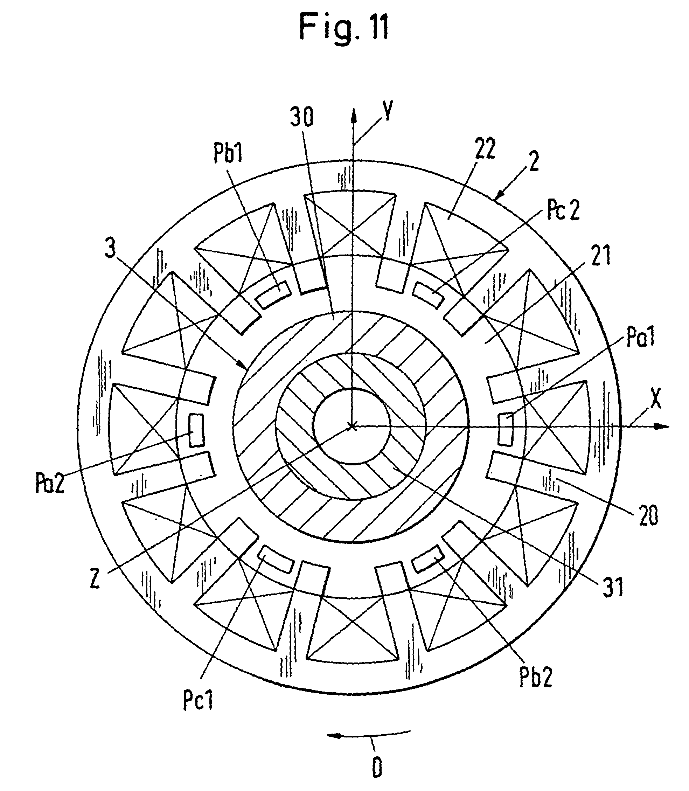

Eine weitere vorteilhafte Variante der Positionssensorik ist in Fig. 11 dargestellt, die einen Querschnitt durch den Stator 2 in einer Darstellung zeigt, die Fig. 1 entspricht. Bei dieser Variante umfasst jeder Positionssensor Pa;Pb;

Pc jeweils zwei Sensorelemente Pa1,Pa2; Pb1,Pb2; Pc1,Pc2, die bezüglich der Umfangsrichtung des Stators 2 um 180° versetzt zueinander angeordnet sind, also bezüglich der Z-Achse des Statorsystems gegenüberliegend. Durch eine solche Anordnung können systematische Fehler, wie Common-Mode Störungen, Offsets und thermische Driften in den Positionssensoren Pa,Pb,Pc eliminiert werden, indem das Differenzsignal aus den beiden Signalen, die von denjenigen Sensorelementen kommen, die zum gleichen Positionssensor gehören, für die Auswertung herangezogen wird.

Natürlich ist es auch möglich, die drei Positionssensoren Pa,Pb,Pc in einem von 120° verschiedenen Winkel anzuordnen. Dies hat jedoch zur Folge, dass die 2-3-Transformation im zweiten Block 62 der Positionseinheit 6 beim Ausfall eines Positionssensors Pa,Pb,Pc geändert werden muss. Da mit der geometrischen Anordnung der Positionssensoren im konkreten Anwendungsfall auch die bei einem Ausfall eines Positionssensors zu verwendende jeweilige Ersatztransformation für alle möglichen Ausfälle bestimmbar ist, können diese Ersatztransformationen in der Positionseinheit 6 gespeichert sein. Wird der Ausfall eines Positionssensors Pa,Pb oder Pc detektiert, so schaltet die Positionseinheit 6 auf die zugehörige Ersatztransformation um, in sinngemäss gleicher Weise wie dies weiter vorne anhand der Transformationseinheit 42 bzw. der Überwachungseinheit 5 erläutert wurde.

Ein zweites bevorzugtes Ausführungsbeispiel der erfindungsgemässen magnetischen Lagervorrichtung 1 unterscheidet sich von dem ersten Ausführungsbeispiels durch die Ausgestaltung der Positionssensorik. Ansonsten gelten die Erläuterungen des ersten Ausführungsbeispiels in sinngemäss gleicher Weise auch für das zweite Ausführungsbeispiel.

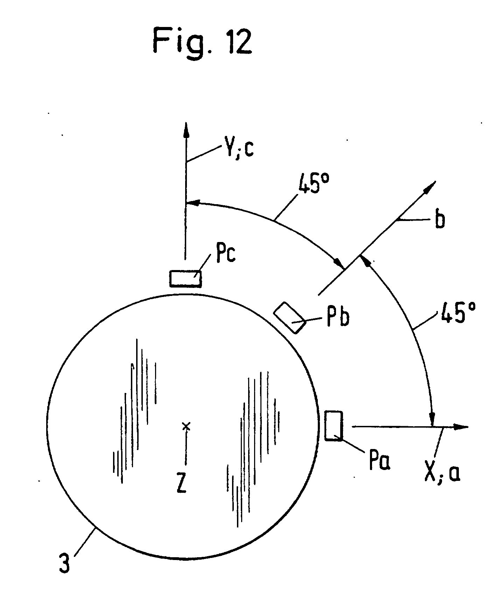

Bei dem zweiten Ausführungsbeispiel sind ebenfalls drei Positionssensoren Pa,Pb,Pc vorgesehen, deren Anordnung in Fig. 12 dargestellt ist. Auch hier ist wie in Fig 10 der Stator 2 nicht dargestellt. Die drei Positionssensoren Pa,Pb,Pc sind derart angeordnet, dass der in Umfangsrichtung des Stators 2 betrachtete Winkel zwischen dem ersten und dem zweiten Positionssensor Pa und Pb sowie der Winkel zwischen dem zweiten und dem dritten Positionssensor Pb und Pc jeweils 45° beträgt. Führt man nun in Anlehnung an die Ausführungen bezüglich des ersten Ausführungsbeispiels ein ebenes Koordinatensystem mit einer a-, einer b- und einer c-Achse ein, die alle drei in der X-Y-Ebene des Statorsystems liegen, wobei die a- bzw. b- bzw. c-Achse durch die Verbindungslinie zwischen dem Ursprung des Statorsystems und dem Ort des Positionssensors Pa bzw. Pb bzw. Pc festgelegt ist, so lassen sich mittels der drei Positionssensoren Pa,Pb,Pc die drei Lagekoordinaten a,b,c des Rotors 3 im a,b,c-System bestimmen. Bei der in Fig. 12 gezeigten Anordnung stimmt die a-Achse mit der X-Achse des Statorsystems überein und die c-Achse mit der Y-Achse des Statorsystems.

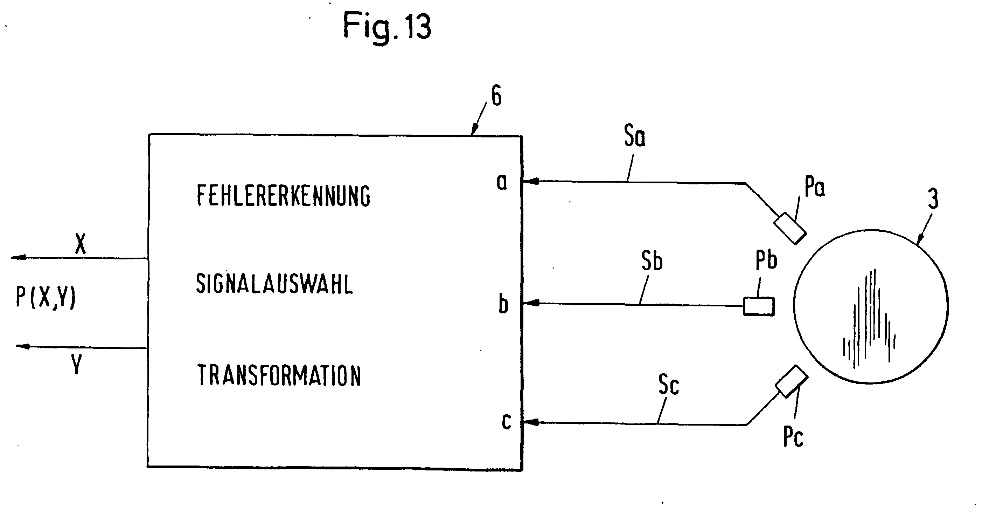

Die Positionssensoren Pa,Pb,Pc sind wiederum mittels der Signalleitungen Sa,Sb,Sc mit der Positionseinheit 6 verbunden, die in Fig. 13 dargestellt ist. Die Positionseinheit 6 generiert mit Hilfe der Sensorsignale das zweikomponentige Positionssignal P(X,Y), welches dem Positionsregler 43 zugeführt wird. Falls alle drei Positionssensoren Pa,Pb,Pc ordnungsgemäss funktionieren, werden nur die Signale der Sensoren Pa und Pc zum Bestimmen des zweikomponentigen Positionssignals P(X,Y) verwendet. Da die Lagekoordinaten a bzw. c im dreiphasigen a,b,c-System identisch sind mit den Auslenkungen des Rotors 3 in Richtung der X- bzw. der Y-Achse des Statorsystems ist in der Positionseinheit 6 keine Transformation vonnöten. Das dritte Signal, nämlich das des Positionssensors Pb, verwendet die Positionseinheit 6 zum Überwachen des korrekten Funktionierens der beiden anderen Sensoren Pa und Pc. Für den Zusammenhang zwischen den Lagekoordinaten a,b,c im dreiphasigen a,b,c-System gilt nämlich:

$$b = \frac{\sqrt{2}}{2} \cdot (a+c)$$

Die Positionseinheit 6 überprüft also ständig, ob diese Bedingung erfüllt ist. Falls diese Bedingung nicht mehr erfüllt ist, liegt ein Fehler vor. Dies kann auch ein konstanter Fehler, wie zum Beispiel ein Offset, sein.

Vorzugsweise überwacht die Positionseinheit 6, wie bereits im Zusammenhang mit dem ersten Ausführungsbeispiel erläutert, jeden einzelnen der Positionssensoren Pa,Pb und Pc, beispielsweise indem die Positionseinheit 6 überprüft, ob das über die Zeit gemittelte Sensorsignal für jeden Positionssensor Pa,Pb,Pc innerhalb eines vorgebbaren Toleranzbereichs liegt. Die Mittelung erfolgt dabei über einen Zeitraum, der mehreren Abtastperioden der Positionssensoren Pa,Pb,Pc entspricht. Sobald die Positionseinheit 6 einen Fehler in einem der Positionssensoren Pa,Pb,Pc detektiert, verwendet sie eine entsprechende Transformation, um aus den Signalen der beiden verbleibenden fehlerfreien Positionssensoren Pa,Pb,Pc das zweikomponentige Positionssignal P(X,Y) zu bestimmen. Für die in Fig. 12 dargestellte Anordnung sind die möglichen Transformationen durch die folgenden Gleichungen bestimmt:

Falls der Positionssensor Pc ausfällt:

$$\begin{bmatrix} X \\ Y \end{bmatrix} = \underline{\underline{T1}} \cdot \begin{bmatrix} a \\ b \end{bmatrix} \qquad \text{mit} \qquad \underline{\underline{T1}} = \begin{bmatrix} 1 & 0 \\ -1 & \sqrt{2} \end{bmatrix}$$

Falls der Positionssensor Pb ausfällt:

$$\begin{bmatrix} X \\ Y \end{bmatrix} = \underline{\underline{T2}} \cdot \begin{bmatrix} a \\ c \end{bmatrix} \qquad \text{mit} \qquad \underline{\underline{T2}} = \begin{bmatrix} 1 & 0 \\ 0 & 1 \end{bmatrix}$$

Falls der Positionssensor Pa ausfällt:

$$\begin{bmatrix} X \\ Y \end{bmatrix} = \underline{\underline{T3}} \cdot \begin{bmatrix} b \\ c \end{bmatrix} \qquad \text{mit} \qquad \underline{\underline{T3}} = \begin{bmatrix} \sqrt{2} & -1 \\ 0 & 1 \end{bmatrix}$$

Im Falle, dass das zweikomponentige Positionssignal P(X,Y), das die X-Komponente X und die Y-Komponente Y des Rotors 3 im Statorsystem repräsentiert, mittels der Lagekoordinaten a und c ermittelt wird, ist also keine Transformation vonnöten, oder anders ausgedrückt, die Transformation ist die identische Transformation mit der Einheitsmatrix $\underline{\underline{T2}}$.

Im Betriebszustand arbeitet die Positionseinheit 6 wie folgt (Fig. 13). Die Positionseinheit 6 erhält von den Positionssensoren Pa,Pb,Pc die entsprechenden Sensorsignale, welche die Lagekoordinaten a,b,c des Rotors im dreiphasigen a,b,c-System repräsentieren. Die Positionseinheit 6 führt anhand dieser Lagekoordinaten a,b,c eine Fehlererkennung, eine Signalauswahl und die geeignete Transformation zur Bestimmung der Koordinaten X und Y der Rotorposition im Statorsystem durch. Bei der Fehlererkennung überprüft die Positionseinheit in bereits erläuterter Weise, ob bei einem der Positionssensoren Pa,Pb oder Pc ein Fehler vorliegt. Abhängig von dem Ergebnis der Fehlererkennung wählt die Positionseinheit 6 dann aus den Lagekoordinaten a,b,c zwei fehlerfreie aus und transformiert diese mit der zugehörigen Transformation in das zweikomponentige Positionssignal P(X,Y) mit den Komponentren X und Y, welche die radiale Position des Rotors 3 im Statorsystem repräsentieren.

Natürlich können auch bei dem zweiten Ausführungsbeispiel die Positionssensoren wiederum jeweils zwei sich gegenüberliegende Sensorelemente umfassen.

Natürlich sind auch bei dem zweiten Ausführungsbeispiel Anordnungen der Positionssensoren Pa,Pb Pc möglich, bei denen der Winkel zwischen den benachbarten Positionssensoren Pa und Pb bzw. Pb und Pc nicht 45° ist, sondern einen anderen beliebigen Wert aufweist. Ein ebenfalls bevorzugter Wert für diesen Winkel ist 60°. Auch können der Winkel zwischen den Positionssensoren Pa und Pb einerseits und der Winkel zwischen den Positionssensoren Pb und Pc andererseits voneinander verschiedene Werte aufweisen. Abhängig von der jeweiligen Anordnung der Positionssensoren lassen sich die benötigten Transformationsmatrizen bestimmen.

Durch die Erfindung wird also eine magnetische Lagervorrichtung bereitgestellt, die auch beim Auftreten von Fehlern noch einen ordnungsgemässen Betrieb, das heisst insbesondere eine zuverlässige magnetische Lagerung des zu lagernden Körpers, ermöglicht. Dadurch weist die Lagervorrichtung eine erhöhte Betriebssicherheit auf. Dies ist insbesondere für sehr sensible Anwendungen, bei denen ein sicheres und fehlerfreies Funktionieren der magnetischen Lagerung wesentlich ist, ein grosser Vorteil. Deshalb ist die erfindungsgemässe magnetische Lagervorrichtung, ausgestaltet als lagerloser Motor mit einem Integralrotor, der Pumpenflügel zum Fördern einer Flüssigkeit aufweist, insbesondere für Blutpumpen, die innerhalb oder ausserhalb des Körpers betrieben werden, geeignet.

**Patentansprüche**

1.   Magnetische Lagervorrichtung zum Lagern eines Körpers (3), insbesondere eines Rotors (3), umfassend einen Stator (2) mit einer mindestens drei Stränge (22a,22b,22c) aufweisenden Steuerwicklung (22) zum Erzeugen eines magnetisches Steuerfelds, mit welchem die Position des Körpers (3) bezüglich des Stators (2) regelbar ist, wobei jeder Strang (22a,22b,22c) zu einer anderen elektrischen Phase gehört, sowie eine Stelleinrichtung (4), die in einem ersten Betriebsmodus jeden Strang (22a,22b,22c) mit jeweils einem Phasenstrom (Ia,Ib,Ic) oder jeweils einer Phasenspannung (Ua,Ub,Uc) als Stellgrösse versorgt, **dadurch gekennzeichnet, dass** Mittel vorgesehen sind, um die Stellgrösse für jeden Strang (22a,22b,22c) unabhängig von der Stellgrösse für die anderen Stränge (22a,22b,22c) zu regeln, und dass eine Überwachungseinheit (5) vorgesehen ist, welche die Lagervorrichtung in einen zweiten Betriebsmodus umschalten kann, in welchem das magnetische Steuerfeld mit einer Anzahl von zwei Phasen erzeugbar ist.

2. Magnetische Lagervorrichtung nach Anspruch 1, bei welcher die Überwachungseinheit (5) das Funktionieren jeder einzelnen Phase überwacht und beim Auftreten eines Fehlers in einer Phase die Lagervorrichtung in den zweiten Betriebsmodus umschaltet, in welchem nur noch die Phasen ohne Fehler das magnetische Steuerfeld erzeugen.

3. Magnetische Lagervorrichtung nach einem der Ansprüche 1 oder 2, bei welcher die Stelleinrichtung (4) eine Verstärkereinheit (41) umfasst, und bei welcher die Mittel zum unabhängigen Regeln der Stellgrösse einen belastbaren Sternpunkt (SP) umfassen, mit dem jede Phase verbunden ist, und der auf ein Potential gelegt ist, welches zwischen den beiden Betriebspotentialen (+,-) der Verstärkereinheit (41) liegt.

4. Vorrichtung nach einem der Ansprüche 1 oder 2, bei welcher die Verstärkereinheit (41) als Mittel zum unabhängigen Regeln der Stellgrösse einen separaten Leistungsverstärker (41a,41b,41c) für jede Phase umfasst, wobei die separaten Leistungsverstärker (41a,41b,41c) insbesondere als H-Brückenschaltung ausgestaltet sind.

5. Magnetische Lagervorrichtung nach einem der vorangehenden Ansprüche, mit mindestens drei Positionssensoren (Pa,Pb,Pc) zum Bestimmen der radialen Position des Körpers (3) in einem Statorsystem, das bezüglich des Stators (2) ortsfest ist.

6. Magnetische Lagervorrichtung nach Anspruch 5, mit einer Positionseinheit (6), welche die Signale der Positionssensoren (Pa,Pb,Pc) mittels einer Transformation in ein zweikomponentiges Positionssignal (P(X,Y)) umwandelt, dessen eine Komponente die X-Koordinate und dessen andere Komponente die Y-Koordinate des Körpers (3) im Statorsystem repräsentiert.

7. Magnetische Lagervorrichtung nach Anspruch 5 oder 6, wobei die drei Positionssensoren (Pa,Pb,Pc) so angeordnet sind, dass jeweils zwei benachbarte Positionssensoren (Pa,Pb,Pc) bezüglich der Umfangsrichtung des Stators (2) um einen Winkel von 120° zueinander versetzt sind.

8. Magnetische Lagervorrichtung nach Anspruch 6 oder 7, wobei die Positionseinheit (6) das Funktionieren der Positionssensoren (Pa,Pb,Pc) überwacht.

9. Magnetische Lagervorrichtung nach Anspruch 8, bei welcher die Positionseinheit (6) beim Auftreten eines Fehlers das Signal des zugehörigen Positionssensors (Pa,Pb,Pc) vor der Transformation auf Null setzt.

10. Magnetische Lagervorrichtung nach Anspruch 8 oder 9, bei welcher die Positionseinheit mittels des Signals von mindestens einem der Positionssensoren (Pa,Pb,Pc) die Funktion der anderen Positionssensoren (Pa,Pb,Pc) überwacht.

11. Magnetische Lagervorrichtung nach Anspruch 8 oder 10, wobei die Positionseinheit (6) im Falle des Auftretens eines Fehlers eine andere Transformation zur Bestimmung des Positionssignals (P(X,Y)) auswählt, in welche nur die Signale von fehlerfreien Positionssensoren (Pa,Pb,Pc) eingehen.

12. Magnetische Lagervorrichtung nach einem der Ansprüche 5-6 oder 8-11, bei welcher die drei Positionssensoren (Pa,Pb,Pc) derart angeordnet sind, dass der in Umfangsrichtung des Stators (2) betrachtete Winkel zwischen dem ersten und dem zweiten Positionssensor (Pa und Pb) sowie der Winkel zwischen dem zweiten und dem dritten Positionssensor (Pb und Pc) jeweils 45° oder jeweils 60° beträgt.

13. Magnetische Lagervorrichtung nach einem der Ansprüche 5-12, wobei jeder Positionssensor (Pa,Pb,Pc) zwei Sensorelemente (Pa1,Pa2,Pb1,Pb2,Pc1,Pc2) umfasst, die bezüglich der Umfangsrichtung des Stators (2) um 180° versetzt zueinander angeordnet sind.

**14.** Magnetische Lagervorrichtung nach einem der vorangehenden Ansprüche ausgebildet als lagerloser Motor, bei welchem der Stator (2) als Lagerund Antriebsstator ausgestaltet ist und der Körper der Rotor (3) des lagerlosen Motors ist.

**15.** Magnetische Lagervorrichtung nach Anspruch 14, bei welcher der Rotor (3) scheiben- oder ringförmig ausgestaltet ist.

**Claims**

**1.** Magnetic bearing apparatus for the journalling of a body (3), in particular of a rotor (3), comprising a stator (2) with a control winding (22) having at least three phase windings (22a, 22b, 22c) for the production of a magnetic control field by means of which the position of the body (3) relative to the stator (2) can be regulated, with each phase winding (22a, 22b, 22c) belonging to a different electrical phase, and a control device (4) which in a first operating mode supplies each phase winding (22a, 22b, 22c) with in each case a phase current (Ia, Ib, Ic) or in each case a phase voltage (Ua, Ub, Uc) as a control parameter, **characterised in that** means are provided in order to regulate the control parameter for each phase winding (22a, 22b, 22c) independently of the control parameter for the other phase windings (22a, 22b, 22c); and **in that** a monitoring unit (5) is provided which can switch over the bearing apparatus into a second operating mode in which the magnetic control field can be generated with a number of two phases.

**2.** Magnetic bearing apparatus in accordance with claim 1 in which the monitoring unit (5) monitors the functioning of each individual phase and, when a fault arises in a phase, switches the bearing apparatus into the second operating mode, in which only the phases without a fault produce the magnetic control field.

**3.** Magnetic bearing apparatus in accordance with claim 1 or claim 2 in which the control device (4) comprises an amplifier unit (41) and in which the means for the independent regulation of the control parameter comprise a star point (SP) which is capable of loading, to which each phase is connected and which is placed at a potential which lies between the two operating potentials (+,-) of the amplifier unit (41).

**4.** Apparatus in accordance with claim 1 or claim 2 in which the amplifier unit (41) comprises a separate power amplifier (41a, 41b, 41c) for each phase as a means for the independent regulation of the control parameter, with the separate power amplifiers (41a, 41b, 41c) being designed in particular as an H-bridge circuit.

**5.** Magnetic bearing apparatus in accordance with one of the preceding claims 1 to 4 comprising at least three position sensors (Pa, Pb, Pc) for the determination of the radial position of the body (3) in a stator system which is stationary relative to the stator (2).

**6.** Magnetic bearing apparatus in accordance with claim 5 comprising a position unit (6) which converts the signals of the position sensors (Pa, Pb, Pc) by means of a transformation into a two-component position signal (P(X,Y)), of which one component represents the X coordinate and of which the other component represents the Y coordinate of the body (3) in the stator system.

**7.** Magnetic bearing apparatus in accordance with claim 5 or claim 6, with the three position sensors (Pa, Pb, Pc) being arranged in such a manner that in each case two adjacent position sensors (Pa, Pb, Pc) are mutually displaced with respect to the peripheral direction of the stator (2) by an angle of 120°.

**8.** Magnetic bearing apparatus in accordance with claim 6 or claim 7, with the position unit (6) monitoring the functioning of the position sensors (Pa, Pb, Pc).

**9.** Magnetic bearing apparatus in accordance with claim 8 in which, when a fault arises, the position unit (6) sets the signal of the associated position sensor (Pa, Pb, Pc) to zero prior to the transformation.

**10.** Magnetic bearing apparatus in accordance with claim 8 or claim 9 in which the position unit monitors, by means of the signal of at least one of the position sensors (Pa, Pb, Pc), the functioning of the other position sensors (Pa, Pb, Pc).

**11.** Magnetic bearing apparatus in accordance with claim 8 or claim 10 wherein, in the event of the occurrence of a fault, the position unit (6) selects another transformation for the determination of the position signal (P(X,Y)) in which only the signals of fault-free position sensors (Pa, Pb, Pc) are involved.

12. Magnetic bearing apparatus in accordance with one of the claims 5 to 6 or 8 to 11 in which the three position sensors (Pa, Pb, Pc) are arranged in such a manner that, viewed in the peripheral direction of the stator (2), the angle between the first and the second position sensors (Pa and Pb) and the angle between the second and the third position sensors (Pb and Pc) amounts in each case to 45° or in each case to 60°.

13. Magnetic bearing apparatus in accordance with one of the claims 5 to 12, with each position sensor (Pa, Pb, Pc) comprising two sensor elements (Pa1, Pa2, Pb1, Pb2, Pc1, Pc2) which are arranged with a mutual displacement of 180° with respect to the peripheral direction of the stator (2).

14. Magnetic bearing apparatus in accordance with one of the preceding claims which is designed as a bearing-free motor in which the stator (2) is designed as a bearing and drive stator and the body is the rotor (3) of the bearing-free motor.

15. Magnetic bearing apparatus in accordance with claim 14 in which the rotor (3) is designed in the shape of a disc or a ring.

## Revendications

1. Dispositif formant palier magnétique pour loger un corps (3), en particulier un rotor (3), comprenant un stator (2) avec un enroulement de commande (22) présentant au moins trois conducteurs (22a, 22b, 22c) pour produire un champ de commande magnétique, au moyen duquel la position du corps (3) est réglable par rapport au stator (2), où chaque conducteur (22a, 22b, 22c) fait partie d'une autre phase électrique, ainsi qu'une installation de positionnement (4) qui, dans un premier mode de fonctionnement, alimente chaque conducteur (22a, 22b, 22c) avec respectivement un courant de phase (Ia, Ib, Ic) ou respectivement une tension de phase (Ua, Ub, Uc) comme grandeur de positionnement, **caractérisé en ce que** des moyens sont prévus pour régler la grandeur de positionnement pour chaque conducteur (22a, 22b, 22c) indépendamment de la grandeur de positionnement des autres conducteurs (22a, 22b, 22c), et **en ce qu'**une unité de surveillance (5) est prévue qui peut commuter le dispositif formant palier en un second mode de fonctionnement dans lequel le champ de commande magnétique peut être produit avec un nombre de deux phases.

2. Dispositif formant palier magnétique selon la revendication 1, où l'unité de surveillance (5) surveille le fonctionnement de chaque phase individuelle et, lors de la survenue d'une erreur dans une phase, commute le dispositif formant palier en second mode de fonctionnement dans lequel ce sont uniquement les phases sans erreur qui produisent le champ de commande magnétique.

3. Dispositif formant palier magnétique selon l'une des revendications 1 ou 2, où l'installation de positionnement (4) comprend une unité d'amplification (41), et où les moyens pour le réglage indépendant de la grandeur de positionnement comprennent un point neutre SP pouvant être chargé, auquel est reliée chaque phase, et qui est mis à un potentiel qui se situe entre les deux potentiels de fonctionnement (+,-) de l'unité d'amplification (41).

4. Dispositif selon l'une des revendications 1 ou 2, où l'unité d'amplification (41), comme moyen pour le réglage indépendant de la grandeur de positionnement, comprend un amplificateur de puissance séparé (41a, 41b, 41c) pour chaque phase, où les amplificateurs de puissance séparés (41a, 41b, 41c) sont réalisés en particulier comme montage en pont H.

5. Dispositif formant palier magnétique selon l'une des revendications précédentes, avec au moins trois capteurs de position (Pa, Pb, Pc) pour déterminer la position radiale du corps (3) dans un système à stator, qui est fixe par rapport au stator (2).

6. Dispositif formant palier magnétique selon la revendication 5, avec une unité de position (6) qui transforme les signaux des capteurs de position (Pa, Pb, Pc) au moyen d'une transformation en un signal de position (P(X, Y)) à deux composantes, dont une composante représente la coordonnée X et dont l'autre composante représente la coordonnée Y du corps (3) dans le système de stator.

7. Dispositif formant palier magnétique selon la revendication 5 ou 6, où les trois capteurs de position (Pa, Pb, Pc) sont disposés de façon que respectivement deux capteurs de position avoisinants (Pa, Pb, Pc), relativement à la direction périphérique du stator (2), sont décalés selon un angle de 120° l'un de l'autre.

8. Dispositif formant palier magnétique selon la revendication 6 ou 7, où l'unité de positionnement (6) surveille le fonctionnement des capteurs de position (Pa, Pb, Pc).

9. Dispositif formant palier magnétique selon la revendication 8, où l'unité de position (6), lors de la survenue d'une erreur, met le signal du capteur de position associé (Pa, Pb, Pc), avant la transformation, à zéro.

10. Dispositif formant palier magnétique selon la revendication 8 ou 9, où l'unité de position surveille au moyen du signal d'au moins l'un des capteurs de position (Pa, Pb, Pc) la fonction des autres capteurs de position (Pa, Pb, Pc).

11. Dispositif formant palier magnétique selon la revendication 8 ou 9, où l'unité de position (6) dans le cas de la survenue d'une erreur, sélectionne une autre transformation pour définir le signal de position (P(X, Y)), dans laquelle entrent seulement les signaux de capteurs de position (Pa, Pb, Pc) exempts d'erreur.

12. Dispositif formant palier magnétique selon l'une des revendications 5-6 ou 8-11, où les trois capteurs de position (Pa, Pb, Pc) sont disposés de façon que l'angle considéré dans la direction périphérique du stator (2), entre le premier et le deuxième capteur de position (Pa et Pb) ainsi que l'angle entre le deuxième et le troisième capteur de position (Pb et Pc), soient respectivement de 45° ou respectivement de 60°.

13. Dispositif formant palier magnétique selon l'une des revendications 5 à 12, où chaque capteur de position (Pa, Pb, Pc) comprend deux éléments de capteur (Pa1, Pa2, Pb1, Pb2, Pc1, Pc2) qui sont disposés relativement à la direction périphérique du stator (2) selon un décalage de 180° l'un de l'autre.

14. Dispositif formant palier magnétique selon l'une des revendications précédentes, réalisé comme moteur exempt de palier, où le stator (2) est réalisé comme stator de palier et d'entraînement, et le corps est le rotor (3) du moteur exempt de palier.

15. Dispositif formant palier magnétique selon la revendication 14, où le rotor (3) est réalisé en forme de disque ou d'anneau.

# Fig. 1

# Fig. 2

Fig. 3

$$\underline{\underline{C}} = \frac{2}{3} \cdot \begin{bmatrix} 1 & -\frac{1}{2} & -\frac{1}{2} \\ 0 & -\frac{\sqrt{3}}{2} & -\frac{\sqrt{3}}{2} \\ \frac{1}{\sqrt{2}} & \frac{1}{\sqrt{2}} & \frac{1}{\sqrt{2}} \end{bmatrix}$$

$$\underline{\underline{C}}^{-1} = \begin{bmatrix} 1 & 0 & \frac{1}{\sqrt{2}} \\ -\frac{1}{2} & \frac{\sqrt{3}}{2} & \frac{1}{\sqrt{2}} \\ -\frac{1}{2} & -\frac{\sqrt{3}}{2} & \frac{1}{\sqrt{2}} \end{bmatrix}$$

Fig.4

$$\underline{\underline{C1}} = \begin{bmatrix} 1 & -\frac{1}{2} \\ 0 & \frac{\sqrt{3}}{2} \end{bmatrix}$$

$$\underline{\underline{C1}}^{-1} = \begin{bmatrix} 1 & \frac{1}{\sqrt{3}} \\ 0 & \frac{2}{\sqrt{3}} \end{bmatrix}$$

Fig. 5

$$\underline{\underline{C2}} = \begin{bmatrix} 1 & -\frac{1}{2} \\ 0 & -\frac{\sqrt{3}}{2} \end{bmatrix}$$

$$\underline{\underline{C2}}^{-1} = \begin{bmatrix} 1 & -\frac{1}{\sqrt{3}} \\ 0 & -\frac{2}{\sqrt{3}} \end{bmatrix}$$

Fig. 6

# Fig. 7

$$\underline{\underline{C3}} = \begin{bmatrix} -\dfrac{1}{2} & -\dfrac{1}{2} \\ \dfrac{\sqrt{3}}{2} & -\dfrac{\sqrt{3}}{2} \end{bmatrix}$$

$$\underline{\underline{C3}}^{-1} = \begin{bmatrix} -1 & \dfrac{1}{\sqrt{3}} \\ -1 & -\dfrac{1}{\sqrt{3}} \end{bmatrix}$$

Fig. 8

# Fig. 9

41a; 41b; 41c

22a; 22b; 22c

Ia; Ib; Ic

411

# Fig. 10

# Fig. 11

Fig. 12

# Fig.13

FEHLERERKENNUNG

SIGNALAUSWAHL

TRANSFORMATION

EP 0 989 315 B1